# EUROPEAN PATENT APPLICATION

(11) **EP 4 831 129 A1**
(43) Date of publication of application: **28.10.2026**
(21) Application number: 24907397.4
(22) Date of filing: 17.12.2024
(51) Int. Cl.: C01G 23/00, C09D 7/62, C09D 201/00

(54) **METAL OXIDE PARTICLES HAVING CORE/SHELL STRUCTURE HAVING UNIFORM PARTICLE SIZE DISTRIBUTION, AND METHOD FOR PRODUCING SAME**

(30) Priority: 20.12.2023 JP 2023215244
(71) Applicant: Nissan Chemical Corporation, Tokyo 103-6119 (JP)
(72) Inventor: WATANABE Yuki, Funabashi-shi, Chiba 274-0052 (JP); YAMAGUCHI Masato, Funabashi-shi, Chiba 274-0052 (JP)
(74) Representative: Henkel & Partner mbB
(86) International application number: PCT/JP2024/044533
(87) International publication number: WO 2025/135012

(57) **Abstract**

Provided are: core/shell-type metal oxide particles which are suitably used for an optical thin film, such as a hard coat, an ultraviolet blocking layer, an anti-reflection film or a diffractive optical element material, have excellent light resistance, transparency and processing properties, e.g. imprinting, and have a high refractive index; and a method for producing the same. In these core/shell-type metal oxide particles (C), the surface of metal oxide particles (A1) serving as a core is coated with a metal oxide (A2) containing titanium oxide, and the coating layer is further coated with a metal oxide (A3) having a metal oxide other than titanium oxide as the main component. The average primary particle diameter of said core/shell-type metal oxide particles (C) is 10 to 20 nm, and the metal oxide particles (A1) are rutile-type titanium oxide containing at least one selected from the group consisting of tin oxide, zirconium oxide, zinc oxide, iron oxide, nickel oxide and aluminium oxide.

## Description

### Technical Field

The present invention relates to a core-shell type metal oxide particle having an average primary particle diameter of 10 to 20 nm such that a surface of a metal oxide particle as a core is coated with a metal oxide containing titanium oxide and the resulting coating is further coated with a metal oxide containing, as a main component, a metal oxide(s) other than titanium oxide, and a method for producing the core-shell type metal oxide particle. The present invention relates more specifically to a core-shell type metal oxide particle having excellent light resistance, transparency, and processability such as imprinting, and having a high refractive index, which is suitable for optical thin films such as hard coatings, UV-cut layers, antireflection films, and diffractive optical element materials, and a method for producing the core-shell type metal oxide particle.

### Background Art

Traditionally, varnishes containing metal oxide particles have been used to form optical thin films for eyeglass lenses and various displays. For example, the higher the refractive index of the lens base material, the thinner the eyeglass lens can be made. Thus, the higher refractive index is preferable for the varnish used for hard coatings for eyeglass lenses. Further, in general, antireflective films are produced by alternately stacking a high refractive index layer and a low refractive index layer. From the viewpoint of antireflective performance, it is preferable to use a varnish having a higher refractive index for the high refractive index layer. Therefore, the metal oxide particles having higher refractive index is preferred to be contained in the varnish. For example, metal oxides such as titanium oxide, tantalum oxide, zirconium oxide, and tin oxide are known to have a high refractive index. Among them, titanium oxide with a rutile-type crystal structure has the highest refractive index and is chemically stable, making it a preferred metal oxide having a high refractive index. Various proposals have been made for such rutile-type titanium oxide particles (see Patent Documents 1 through 3). Patent Document 1 discloses a titanium oxide-containing core-shell type metal oxide particle comprising a titanium oxide-containing core particle and a silicon dioxide-tin dioxide composite metal oxide that coats the core particle and having, therebetween, one or more intermediate layers comprising any one of an oxide of at least one element selected from the group consisting of Si, Al, Sn, Zr, Zn, Sb, Nb, Ta, and W, a composite metal oxide, or a mixture of the oxide and the composite metal oxide. Patent Document 2 discloses a rutile-type core-shell metal oxide particle in which a core particle composed of any one of tin oxide, zinc-doped titanium oxide, or tin-doped titanium oxide is coated with rutile-type titanium oxide. Patent Document 3 discloses a rutile-type titanium oxide particle containing 90 wt% or more of titanium oxide in terms of TiO₂.

### Prior Art Documents

### Patent Document

Patent Document 1: JP 5896178 B2
Patent Document 2: JP 2008-308386 A
Patent Document 3: WO 2022/210973 A1

### Summary of Invention

### Technical Problem

However, according to the knowledge of the present inventors, the titanium oxide-containing core-shell type metal oxide particle described in Patent Document 1 uses a material having a lower refractive index than titanium oxide for the intermediate layer. Thus, the core-shell type metal oxide particle may have a lower refractive index. In addition, the rutile-type core-shell metal oxide particle described in Patent Document 2 has titanium oxide as the outermost layer. Thus, the optical activity cannot be suppressed and the light resistance may be insufficient. Further, the rutile-type titanium oxide particle described in Patent Document 3 has insufficient transparency due to the large dispersion particle diameter, so that the transparency is insufficient. In addition, since the amount of titanium oxide in the particle is large, the light resistance may be insufficient.

The purpose of the present invention is to provide: a core-shell type metal oxide particle having excellent light resistance, transparency, and processability such as imprinting and having a high refractive index, which is suitable for optical thin films such as hard coatings, UV-cut layers, anti-reflective films, and diffractive optical elements, such that a surface of a metal oxide particle as a core is coated with a metal oxide containing titanium oxide and the resulting coating is further coated with a metal oxide containing, as a main component, a metal oxide(s) other than titanium oxide, and the average primary particle diameter is from 10 to 20 nm; and a method for producing the core-shell type metal oxide particle.

### Solution to Problem

The first item of the present invention provides a core-shell type metal oxide particle (C) having an average primary particle diameter of 10 to 20 nm, wherein when the metal oxide particle is observed under a transmission electron microscope, a standard deviation σ of an equivalent circular diameter of the particle is less than 3 nm.

The second item provides the core-shell type metal oxide particle (C) according to item 1, wherein a surface of a core metal oxide particle (A1) is coated with a titanium oxide-containing metal oxide (A2), and the resulting coating is further coated with a metal oxide (A3) containing, as a main component, a metal oxide other than titanium oxide, and wherein the metal oxide particle (A1) is rutile-type titanium oxide containing at least one selected from the group consisting of tin oxide, zirconium oxide, zinc oxide, iron oxide, nickel oxide, and aluminum oxide.

The third item provides the core-shell type metal oxide particle (C) according to item 2, wherein the metal oxide (A3) includes at least one metal oxide selected from the group consisting of zirconium oxide, tin oxide, silicon dioxide, zinc oxide, antimony oxide, niobium oxide, tungsten oxide, aluminum oxide, and tantalum oxide, or a composite of two or more metal oxides.

The fourth item provides the core-shell type metal oxide particle (C) according to item 2 or 3, wherein the metal oxide (A3) is a tin oxide-silicon dioxide composite metal oxide.

The fifth item provides the core-shell type metal oxide particle (C) according to any one of items 1 to 4, wherein the core-shell metal oxide particle (C) has a refractive index of 2.1 to 2.7.

The sixth item provides the core-shell type metal oxide particle (C) according to any one of items 1 to 5, comprising 60 to 85 mass% of titanium oxide in terms of TiO₂.

The seventh item provides the core-shell type metal oxide particle (C) according to any one of items 1 to 6, wherein the core-shell metal oxide particle (C) is further coated with a shell (B).

The eighth item provides the core-shell type metal oxide particle (C) according to item 7, wherein the shell (B) is at least one selected from the group consisting of an amine (B1), a silane compound (B2), an organic acid, an organic acid ester (B3), a phosphate (B4), and a surfactant (B5).

The ninth item provides the core-shell type metal oxide particle (C) according to item 8, wherein the amine (B1) is a C₅₋₃₅ secondary amine and/or tertiary amine.

The tenth item provides the core-shell type metal oxide particle (C) according to item 8, wherein the silane compound (B2) is a hydrolysis product and/or a dehydration condensation product of at least one silane compound selected from the group consisting of formulas (1) to (3):
[Chemical Formula 1]

R¹ₐSi(R² )₄₋ₐ Formula (1)

[R³_{b}Si(R⁴)_{3-b}]₂Y_{c} Formula (2)

R⁵_{d}Si(R⁶)_{4-d} Formula (3)

wherein in formula (1), R¹ moieties are each an alkyl group, a halogenated alkyl group, an alkenyl group, an aryl group, or an organic group having a polyether group, an epoxy group, a (meth)acryloyl group, a mercapto group, an amino group, a ureido group, or a cyano group, and bonded to a silicon atom via a Si-C bond, R² moieties each represent an alkoxy group, an acyloxy group, or a halogen group, and a represents an integer from 1 to 3; and
in formulas (2) and (3), R³ and R⁵ moieties are each a C₁₋₃ alkyl group or a C₆₋₃₀ aryl group, and bonded to a silicon atom via a Si-C bond, R⁴ and R⁶ moieties are each an alkoxy group, an acyloxy group, or a halogen group, Y is an alkylene group, an NH group, or an oxygen atom, b is an integer from 1 to 3, c is an integer 0 or 1, and d is an integer from 1 to 3.

The eleventh item provides the core-shell type metal oxide particle (C) according to item 8, wherein the organic acid or organic acid ester (B3) is acetic acid, benzoic acid, oxalic acid, malonic acid, succinic acid, glycolic acid, lactic acid, malic acid, tartaric acid, citric acid, or an alkyl, aryl, or arylalkyl ester thereof.

The twelfth item provides the core-shell type metal oxide particle (C) according to item 8, wherein the phosphate (B4) is at least one phosphate selected from the group consisting of formulas (4) to (6): 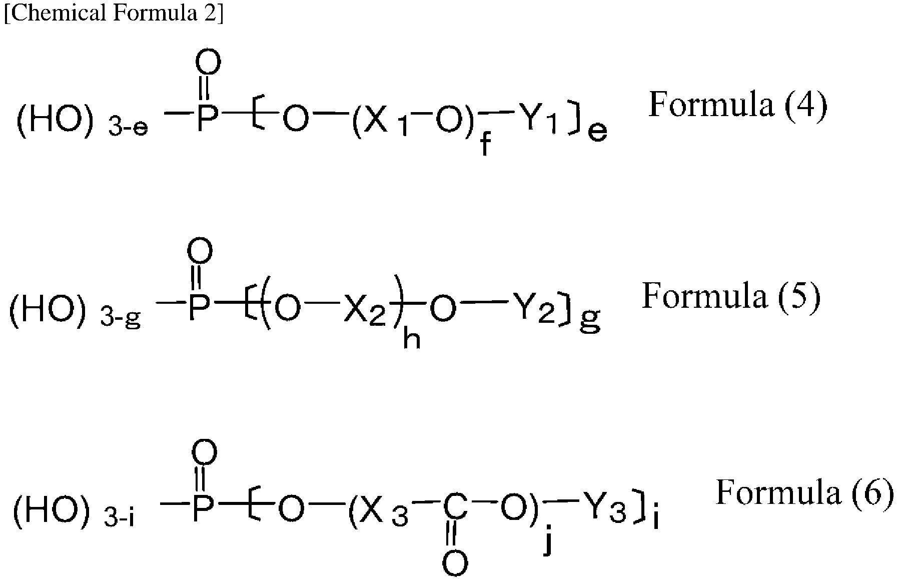 wherein in formulas (4) to (6), X₁, X₂, and X₃ each represent a C₂₋₂₀ alkylene group, f, h, and j each represent an integer from 1 to 100, e, g, and i each represent an integer from 1 to 3, and Y₁, Y₂, and Y₃ each represent a hydrogen atom, a C₁₋₂₀ alkyl group, a C₂₋₂₀ alkenyl group, a C₆₋₃₀ aryl group, or a (meth)acrylic group.

The thirteenth item provides the core-shell type metal oxide particle (C) according to item 8, wherein the surfactant (B5) is an anionic surfactant, a cationic surfactant, a nonionic surfactant, or an amphoteric surfactant.

The fourteenth item provides a core-shell type metal oxide sol comprising the core-shell type metal oxide particle (C) according to any one of items 1 to 13 and a dispersant.

The fifteenth item provides the core-shell metal oxide sol according to item 14, wherein the dispersant is a dispersant consisting of water, alcohol, ether, ester, ketone, amide, hydrocarbon, or a combination thereof.

The sixteenth item provides a varnish comprising the core-shell type metal oxide particle (C) or core-shell type metal oxide sol according to any one of items 1 to 15, and a thermosetting and/or photocurable resin.

The seventeenth item provides the varnish according to item 16, wherein the varnish is a varnish for improving light resistance.

The eighteenth item provides the varnish according to item 16, wherein the varnish is a varnish for hard coating.

The nineteenth item provides the varnish according to item 16, wherein the varnish is a varnish for nanoimprinting.

The twentieth item provides a method for producing the core-shell type metal oxide sol according to item 14 or 15, the method comprising the steps (i), (ii), and (iii):
step (i): step (i) of adding a precursor material of titanium oxide-containing metal oxide (A2) to a metal oxide sol comprising a core metal oxide particle (A1) using water as a dispersant;
step (ii): step (ii) of heating the sol comprising the core metal oxide particle (A1) and the precursor material of titanium oxide-containing metal oxide (A2) to coat a surface of the core metal oxide particle (A1) with the titanium oxide-containing metal oxide (A2); and
step (iii): step (iii) of adding, to the sol obtained in step (ii), a sol comprising a metal oxide (A3) containing, as a main component, a metal oxide other than titanium oxide with water as a dispersant and further heating the resulting sol.

### Advantageous Effects of Invention

The present invention can provide: a core-shell type metal oxide particle having excellent light resistance, transparency, and processability such as imprinting and having a high refractive index, which is suitable for optical thin films such as hard coatings, UV-cut layers, anti-reflective films, and diffractive optical elements, such that a surface of a core rutile-type titanium oxide particle containing at least one selected from the group consisting of tin oxide, zirconium oxide, zinc oxide, iron oxide, nickel oxide, and aluminum oxide is coated with a metal oxide containing titanium oxide and the resulting coating is further coated with a metal oxide containing, as a main component, a metal oxide(s) other than titanium oxide, and the average primary particle diameter is from 10 to 20 nm; and a method for producing the core-shell type metal oxide particle.

Titanium oxide particles are highly photoactive, and when mixed with various binders or resin components, which are used in high-refractive index materials, as a matrix component, discoloration or degradation of the matrix component may occur.

To suppress photoactivity of titanium oxide particles, the titanium oxide-containing rutile-type metal oxide particle can be a core-shell type titanium oxide particle coated with a metal oxide(s) other than titanium oxide. In the core-shell type titanium oxide particle, the core titanium oxide-containing rutile-type metal oxide particle may be coated with a shell metal oxide other than titanium oxide. In this case, the smaller the ratio of shell metal oxide components other than titanium oxide to the core particle, the higher the refractive index of the core-shell type titanium oxide particle.

When the average primary particle diameter of such a core-shell type titanium oxide particle is less than 10 nm, the specific surface area of the particle is large. Thus, when a matrix component such as various binders and resin components is mixed, the contact area between the core-shell type titanium oxide particle and the matrix component becomes large. Therefore, the photoactivity of titanium oxide may cause discoloration or degradation of the matrix component.

In contrast, the average primary particle diameter of the core-shell type titanium oxide particle is set to 10 to 20 nm. Accordingly, when a matrix component such as various binders and resin components is mixed, the contact area between the core-shell type titanium oxide particle and the matrix component becomes small. This can suppress discoloration or degradation of the matrix component due to the photoactivity of titanium oxide.

In such core-shell type titanium oxide particles with an average primary particle diameter of 10 to 20 nm, there may be abundant coarse particles having a primary particle diameter of more than 20 nm. In this case, the varnish obtained by mixing the particles and the matrix component does not necessarily provide sufficient film transparency due to light scattering. In contrast, by building up and coating the surface of the core rutile-type titanium oxide particle with titanium oxide, coarse particles larger than 20 nm can be decreased, and sufficient film transparency can thus be obtained.

### Description of Embodiments

Hereinafter, preferred embodiments of the present invention will be described. However, the following embodiments are examples to illustrate the present invention, and the present invention is not limited to the following embodiments in any way.

An embodiment of the present invention provides a core-shell type metal oxide particle (C) having an average primary particle diameter of 10 to 20 nm, wherein a surface of a core metal oxide particle (A1) is coated with a titanium oxide-containing metal oxide (A2), and the resulting coating is further coated with a metal oxide (A3) containing, as a main component, a metal oxide other than titanium oxide, and wherein the metal oxide particle (A1) is rutile-type titanium oxide containing at least one selected from the group consisting of tin oxide, zirconium oxide, zinc oxide, iron oxide, nickel oxide, and aluminum oxide.

The core metal oxide particle (A1) is preferably rutile-type titanium oxide containing tin oxide. Examples include a composite metal oxide particle of titanium oxide and tin oxide, a composite metal oxide particle of titanium oxide, tin oxide, and zirconium oxide, a composite metal oxide particle of titanium oxide, tin oxide, and zinc oxide, a composite metal oxide particle of titanium oxide, tin oxide, and iron oxide, a composite metal oxide particle of titanium oxide, tin oxide, and nickel oxide, or a composite metal oxide particle of titanium oxide, tin oxide, and aluminum oxide. The average particle diameter thereof can be from 5 to 15 nm or 7 to 13 nm by observation under a transmission electron microscope.

The titanium oxide-containing metal oxide (A2) that coats the core should be mainly composed of titanium oxide, and the content of titanium oxide may be 50 mass% or more, 50 to 100 mass%, 60 to 100 mass%, 70 to 100 mass%, 80 to 100 mass%, 90 to 100 mass%, or 95 to 100 mass%.

Examples of the metal oxide (A3) that coats the particle where the core metal oxide particle (A1) is coated with the titanium oxide-containing metal oxide (A2) include a metal oxide in which zirconium oxide, tin oxide, silicon dioxide, zinc oxide, antimony oxide, niobium oxide, tungsten oxide, aluminum oxide, and tantalum oxide are each present alone, or a composite metal oxide in which a plurality of the above metal oxides are combined. Examples of the composite metal oxide include a tin oxide-silicon dioxide composite metal oxide, a tin oxide-zirconium oxide-silicon dioxide composite metal oxide, a tin oxide-tungsten oxide-silicon dioxide composite metal oxide, or an antimony oxide-silicon dioxide composite metal oxide. When the coating-use metal oxide contains silicon dioxide, the ratio of silicon dioxide to other metal oxides, namely the mass ratio of (silicon dioxide)/(other metal oxides) can be set to the ratio from 0.1 to 5.0, 0.5 to 5.0, 1.0 to 5.0, 0.1 to 4.0, or 0.5 to 4.0.

Examples of the core-shell type metal oxide particle (C) include, as a combination of (A1)/(A2)/(A3), a titanium oxide-tin oxide composite metal oxide particle/titanium oxide/tin oxide-silicon dioxide composite metal oxide, a titanium oxide-tin oxide-zirconium oxide composite metal oxide particle/titanium oxide/tin oxide-silicon dioxide composite metal oxide, a titanium oxide-tin oxide-zinc oxide composite metal oxide particle/titanium oxide/tin oxide-silicon dioxide composite metal oxide, a titanium oxide-tin oxide-iron oxide composite metal oxide particle/titanium oxide/tin oxide-silicon dioxide composite metal oxide, a titanium oxide-tin oxide-nickel oxide composite metal oxide particle/titanium oxide/tin oxide-silicon dioxide composite metal oxide, or a titanium oxide-tin oxide-aluminum oxide composite metal oxide particle/titanium oxide/tin oxide-silicon dioxide composite metal oxide. These core-shell metal oxide particles (C) have an average primary particle diameter of 10 to 20 nm, 10 to 18 nm, or 12 to 18 nm as observed by transmission electron microscopy. The average primary particle diameter by transmission electron microscopy may be set to 10 to 20 nm, which enables both high refractive index and high light resistance.

The above core-shell type metal oxide particles (C) can be observed with a transmission electron microscope and the standard deviation σ of the equivalent circular diameter of 500 arbitrarily selected particles thereof is less than 3 nm, for example, 0.1 to 3 nm, 0.3 to 3 nm, 0.5 to 3 nm, or 1.0 to 3 nm. By setting the standard deviation σ of the equivalent circular diameter of particles to less than 3 nm, the content of coarse and small particles is reduced, and transparency and processability such as imprinting can be increased when a varnish containing the particles is made.

The refractive index of the above core-shell type metal oxide particle (C) is 2.1 or higher. For example, a core-shell metal oxide particle in the range of 2.1 to 2.7, 2.1 to 2.5, or 2.1 to 2.4 can be obtained.

The above core-shell type metal oxide particles (C) have 60 to 85 mass%, 65 to 85 mass%, or 65 to 80 mass% titanium oxide in terms of TiO₂.

As an example of coating the core metal oxide particle (A1) with the titanium oxide-containing metal oxide (A2), an aqueous sol containing a rutile-type titanium oxide particle that consists of a titanium oxide-tin oxide composite metal oxide and has an average primary particle diameter of 5 to 15 nm is mixed with a titania source (D), which produces titanium oxide by hydrolysis and dehydration condensation reaction. This can yield an aqueous sol of a core-shell type metal oxide particle in which the core metal oxide particle (A1) is coated with the titanium oxide-containing metal oxide (A2). Examples of such a titania source (D) include titanium tetrai-propoxide, titanium tetra-n-butoxide, titanium tetra-t-butoxide, titanium tetrachloride, or titanyl sulfate. It is preferable that no titania particle is produced at the stage before mixing with the core metal oxide particle (A1).

The solid content of the aqueous sol of the core metal oxide particle (A1) is from 0.5 to 50 mass% and preferably from 5 to 30 mass%.

The aqueous sol of the core metal oxide particle (A1) can be used at pH 5 to 11.5 and preferably pH 7 to 11.5. The pH of the aqueous sol can be adjusted by an alkaline component if necessary. Examples of the alkali component used include: an alkali metal (e.g., lithium, sodium, and potassium) hydroxide; an alkaline earth metal (e.g., calcium, magnesium, strontium) hydroxide; an alkylamine (e.g., ammonia, ethylamine, triethylamine, isopropylamine, n-propylamine); an aralkylamine (e.g., benzylamine); an alicyclic amine (e.g., piperidine); an alkanolamine (e.g., monoethanolamine, triethanolamine); or a quaternary ammonium hydroxide.

A particle where the core metal oxide particle (A1) is coated with the titanium oxide-containing metal oxide (A2) may be further coated with the metal oxide (A3) containing, as a main component, a metal oxide(s) other than titanium oxide. In this case, when a tin oxide-silicon dioxide composite metal oxide, for instance, is used for the coating, sodium stannate or potassium stannate may be used as an alkali stannate. Preferred is sodium stannate. Sodium silicate or potassium silicate may be used as alkali silicate.

Alkali stannate and alkali silicate are prepared as an aqueous solution containing silicon dioxide/tin dioxide at a mass ratio of 0.1 to 5, and the cations present in the aqueous solution can then be removed by using a cation exchange resin.

Alkali stannate and alkali silicate are prepared by weighing and dissolving, in water, silicon dioxide/tin dioxide at a mass ratio of 0.1 to 5.0. The preferred solid content of the aqueous solution is from 1 to 12 mass% as (SnO₂ + SiO₂).

The prepared aqueous solution is cation-exchanged with a cation exchange resin to remove cations. As the cation exchange resin, a hydrogen-type strongly acidic cation exchange resin is preferred, such as AMBERLITE (trade name) 120B, which can be packed in a column. This cation exchange causes the silicate and stannate components to polymerize, thereby capable of producing a tin dioxide-silicon dioxide composite metal oxide.

The tin dioxide-silicon dioxide composite metal oxide is poorly stable, and gelatinized in a few hours when left as it is. Therefore, after cation exchange, an amine compound should be added immediately to stabilize a water dispersion containing the tin dioxide-silicon dioxide composite metal oxide (A3) as stabilized with an amine compound present at a silicon dioxide/tin dioxide mass ratio of 0.1 to 5.0 and an M/(SnO₂ + SiO₂) (where M represents the amine compound) molar ratio of 0.001 to 0.08. If the amount of amine compound added is less than 0.001 as the molar ratio of M/(SnO₂ + SiO₂), the dispersion stability of the tin dioxide-silicon dioxide composite metal oxide becomes insufficient. This is not preferable. In addition, the molar ratio of M/(SnO₂ + SiO₂) may exceed 0.08. In this case, when the particle surface of the core-shell type metal oxide particle (C) is further coated with the shell (B), the coating may be hindered.

The resulting water dispersion is 0.1 to 10 mass%, 0.5 to 10 mass%, or 0.5 to 8 mass% in terms of (SnO₂ + SiO₂).

Next, an aqueous sol containing particles in which the core metal oxide particle (A1) having an average primary particle diameter of 5 to 15 nm is coated with the titanium oxide-containing metal oxide (A2), and a water dispersion containing the tin dioxide-silicon dioxide composite metal oxide (A3), as stabilized with an amine compound, at a silicon dioxide/tin dioxide mass ratio of 0.1 to 5.0 and an M/(SnO₂ + SiO₂) (where M represents the amine compound) molar ratio of 0.001 to 0.08 are mixed at a ratio of the total mass of (A1) and (A2) to the tin dioxide-silicon dioxide composite metal oxide (A3) mass, namely a ratio of (A3)/[(A1) + (A2)] of 0.05 to 0.40. This can result in an aqueous sol of core-shell type metal oxide particles (C) where the metal oxide particle (A1) is coated with the titanium oxide-containing metal oxide (A2), and the coating is further coated with the tin dioxide-silicon dioxide composite metal oxide (A3). If the above mass ratio is less than 0.05, the tin dioxide-silicon dioxide composite metal oxide (A3) cannot sufficiently coat the particle where the core metal oxide particle (A1) is coated with the titanium oxide-containing metal oxide (A2). Thus, it is impossible to produce a stable hydrophilic organic solvent dispersion sol or hydrophobic organic solvent dispersion sol with 0.05 to 12 mass% water solubility. If the above mass ratio is larger than 0.40, the particle refractive index becomes too low. The aqueous sol containing particles where the core metal oxide particle (A1) is coated with the titanium oxide-containing metal oxide (A2) and the water dispersion of the composite metal oxide (A3) are preferably mixed under stirring.

In the present invention, the core-shell type metal oxide particle (C) can be further coated with a C₅₋₃₅ secondary or tertiary amine to afford a core-shell type metal oxide particle. The content of the above amine can be set to 0.1 to 10.0 mmol, or 0.5 to 10.0 mmol per 100 g of the core-shell type metal oxide particle (C).

Examples of the above secondary amine include ethyl n-propylamine, ethyl isopropylamine, dipropylamine, diisopropylamine, ethyl butylamine, n-propyl butylamine, dibutylamine, ethyl pentylamine, n-propyl pentylamine, isopropyl pentylamine, dipentylamine, ethyl octylamine, i-propyl octylamine, butyl octylamine, or dioctylamine.

Examples of the above tertiary amine include triethylamine, ethyl di-n-propylamine, diethyl-n-propylamine, tri-n-propylamine, triisopropylamine, ethyl dibutylamine, diethyl butylamine, isopropyl dibutylamine, diisopropylethylamine, diisopropylbutylamine, tributylamine, ethyl dipentylamine, diethyl pentylamine, tripentylamine, methyl dioctylamine, dimethyl octylamine, ethyl dioctylamine, diethyl octylamine, trioctylamine, benzyl dibutylamine, or diazabicycloundecene.

Among the above amines, a secondary or tertiary amine having an alkyl group with a total carbon atom number of 6 to 35 is preferable. Examples include diisopropylamine, tripentylamine, triisopropylamine, dimethyloctylamine, or trioctylamine.

In the present invention, the core-shell type metal oxide particle (C) may be further coated with a hydrolysis and/or dehydration condensation product of at least one silane compound selected from the group consisting of formulas (1) to (3) to produce a core-shell type metal oxide particle.

In formula (1), R¹ moieties are each an alkyl group, a halogenated alkyl group, an alkenyl group, an aryl group, or an organic group having a polyether group, an epoxy group, a (meth)acryloyl group, a mercapto group, an amino group, a ureido group, or a cyano group, and bonded to a silicon atom via an Si-C bond, R² moieties each represent an alkoxy group, an acyloxy group, or a halogen group, and a represents an integer from 1 to 3.

In formulas (2) and (3), R³ and R⁵ moieties are each a C₁₋₃ alkyl group or a C₆₋₃₀ aryl group, and bonded to a silicon atom via an Si-C bond, R⁴ and R⁶ moieties are each an alkoxy group, an acyloxy group, or a halogen group, Y is an alkylene group, an NH group, or an oxygen atom, b is an integer from 1 to 3, c is an integer 0 or 1, and d is an integer from 1 to 3.

The above alkyl group is a C₁₋₁₈ alkyl group. Examples of the above alkyl group include, but are not limited to, a methyl group, an ethyl group, an n-propyl group, an i-propyl group, a cyclopropyl group, an n-butyl group, an i-butyl group, an s-butyl group, a t-butyl group, a cyclobutyl group, a 1-methyl-cyclopropyl group, a 2-methyl-cyclopropyl group, an n-pentyl group, a 1-methyl-n-butyl group, a 2-methyl-n-butyl group, a 3-methyl-n-butyl group, a 1,1-dimethyl-n-propyl group, a 1,2-dimethyl-n-propyl group, a 2,2-dimethyl-n-propyl group, a 1-ethyl-n-propyl group, a cyclopentyl group, a 1-methyl-cyclobutyl group, a 2-methyl-cyclobutyl group, a 3-methyl-cyclobutyl group, a 1,2-dimethyl-cyclopropyl group, a 2,3-dimethyl-cyclopropyl group, a 1-ethyl-cyclopropyl group, a 2-ethyl-cyclopropyl group, an n-hexyl group, a 1-methyl-n-pentyl group, a 2-methyl-n-pentyl group, a 3-methyl-n-pentyl group, a 4-methyl-n-pentyl group, a 1,1-dimethyl-n-butyl group, a 1,2-dimethyl-n-butyl group, a 1,3-dimethyl-n-butyl group, a 2,2-dimethyl-n-butyl group, a 2,3-dimethyl-n-butyl group, a 3,3-dimethyl-n-butyl group, a 1-ethyl-n-butyl group, a 2-ethyl-n-butyl group, a 1,1,2-trimethyl-n-propyl group, a 1,2,2-trimethyl-n-propyl group, a 1-ethyl-1-methyl-n-propyl group, a 1-ethyl-2-methyl-n-propyl group, a cyclohexyl group, a 1-methyl-cyclopentyl group, a 2-methyl-cyclopentyl group, a 3-methyl-cyclopentyl group, a 1-ethyl-cyclobutyl group, a 2-ethyl-cyclobutyl group, a 3-ethyl-cyclobutyl group, a 1,2-dimethyl-cyclobutyl group, a 1,3-dimethyl-cyclobutyl group, a 2,2-dimethyl-cyclobutyl group, a 2,3-dimethyl-cyclobutyl group, a 2,4-dimethyl-cyclobutyl group, a 3,3-dimethyl-cyclobutyl group, a 1-n-propyl-cyclopropyl group, a 2-n-propyl-cyclopropyl group, a 1-i-propyl-cyclopropyl group, a 2-i-propyl-cyclopropyl group, a 1,2,2-trimethyl-cyclopropyl group, a 1,2,3-trimethyl-cyclopropyl group, a 2,2,3-trimethyl-cyclopropyl group, a 1-ethyl-2-methyl-cyclopropyl group, a 2-ethyl-1-methyl-cyclopropyl group, a 2-ethyl-2-methyl-cyclopropyl group, a 2-ethyl-3-methyl-cyclopropyl group, a hexyl group, a heptyl group, an octyl group, a nonyl group, a decyl group, an undecyl group, a dodecyl group, a tridecyl group, a tetradecyl group, a pentadecyl group, a hexadecyl group, a heptadecyl group, or an octadecyl group.

In addition, examples of the alkylene group include an alkylene group derived from any of the alkyl groups mentioned above.

The aryl group above is a C₆₋₃₀ aryl group. Examples include a phenyl group, a naphthyl group, an anthracene group, or a pyrene group.

The alkenyl group is a C₂₋₁₀ alkenyl group. Examples include, but are not limited to, an ethenyl group, a 1-propenyl group, a 2-propenyl group, a 1-methyl-1-ethenyl group, a 1-butenyl group, a 2-butenyl group, a 3-butenyl group, a 2-methyl-1-propenyl group, a 2-methyl-2-propenyl group, a 1-ethylethenyl group, a 1-methyl-1-propenyl group, a 1-methyl-2-propenyl group, a 1-pentenyl group, a 2-pentenyl group, a 3-pentenyl group, a 4-pentenyl group, a 1-n-propyl ethenyl group, a 1-methyl-1-butenyl group, a 1-methyl-2 butenyl group, a 1-methyl-2-butenyl group, a 1-methyl-3-butenyl group, a 2-ethyl-2-propenyl group, a 2-methyl-1-butenyl group, a 2-methyl-2-butenyl group, a 2-methyl-3-butenyl group, a 3-methyl-1-butenyl group, a 3-methyl-2-butenyl group, a 3-methyl-3-butenyl group, a 1,1-dimethyl-2-propenyl group, a 1-i-propyl ethenyl group, a 1,2-dimethyl-1-propenyl group, a 1,2-dimethyl-2-propenyl group, a 1-cyclopentenyl group, a 2-cyclopentenyl group, a 3-cyclopentenyl group, a 1-hexenyl group, a 2-hexenyl group, a 3-hexenyl group, a 4-hexenyl group, a 5-hexenyl group, a 1-methyl-1-pentenyl group, a 1-methyl-2-pentenyl group, a 1-methyl-3-pentenyl group, a 1-methyl-4-pentenyl group, a 1-n-butyl ethenyl group, a 2-methyl-1-pentenyl group, or a 2-methyl-2-pentenyl group.

The above alkoxy group is, for instance, a C₁₋₁₀ alkoxy group. Examples include, but are not limited to, a methoxy group, an ethoxy group, an n-propoxy group, an i-propoxy group, an n-butoxy group, an i-butoxy group, an s-butoxy group, a t butoxy group, an n-pentyloxy group, a 1-methyl-n-butoxy group, a 2-methyl-n-butoxy group, a 3-methyl-n-butoxy group, a 1,1-dimethyl-n-propoxy group, a 1,2-dimethyl-n-propoxy group, a 2,2-dimethyl-n-propoxy group, a 1-ethyl-n-propoxy group, or an n-hexyloxy group.

The above acyloxy group is a C₂₋₁₀ acyloxy. Examples include, but are not limited to, a methylcarbonyloxy group, an ethylcarbonyloxy group, an n-propylcarbonyloxy group, an i-propylcarbonyloxy group, an n-butylcarbonyloxy group, an i-butylcarbonyloxy group, an s-butylcarbonyloxy group, a t-butylcarbonyloxy group, an n-pentylcarbonyloxy group, a 1-methyl-n-butylcarbonyloxy group, a 2-methyl-n-butylcarbonyloxy group, a 3-methyl-n-butylcarbonyloxy group, a 1,1-dimethyl-n-propylcarbonyloxy group, a 1,2-dimethyl-n-propylcarbonyloxy group, a 2,2-dimethyl-n-propylcarbonyloxy group, a 1-ethyl-n-propylcarbonyloxy group, an n-hexylcarbonyloxy group, a 1-methyl-n-pentylcarbonyloxy group, or a 2-methyl-n pentylcarbonyloxy group.

Examples of the above halogen group include fluorine, chlorine, bromine, or iodine.

Examples of the organic group with a polyether group include a polyether propyl group with an alkoxy group. An example is (CH₃O)₃SiC₃H₆(OC₂H₄)ₙOCH₃. The n may be in the range of 1 to 100 or 1 to 10.

Examples of the organic group with an epoxy group include a 2-(3,4-epoxycyclohexyl)ethyl group or a 3-glycidoxypropyl group.

The above (meth)acryloyl group refers to both an acryloyl group and a methacryloyl group. Examples of the organic group with a (meth)acryloyl group include a 3-methacryloxypropyl group or a 3-acryloxypropyl group.

Examples of the organic group with a mercapto group include a 3-mercaptopropyl group.

Examples of the organic group with an amino group include a 2-aminoethyl group, a 3-aminopropyl group, an N-2-(aminoethyl)-3-aminopropyl group, an N-(1,3-dimethylbutylidene) aminopropyl group, an N-phenyl-3-aminopropyl group, or an N-(vinylbenzyl)-2-aminoethyl-3-aminopropyl group.

Examples of the organic group with an ureido group include a 3-ureidopropyl group.

Examples of the organic group with a cyano group include a 3-cyanopropyl group.

Formulas (2) and (3) above preferably represent a compound that can form a trimethylsilyl group on the surface of silica particles.

Each compound can be exemplified below.

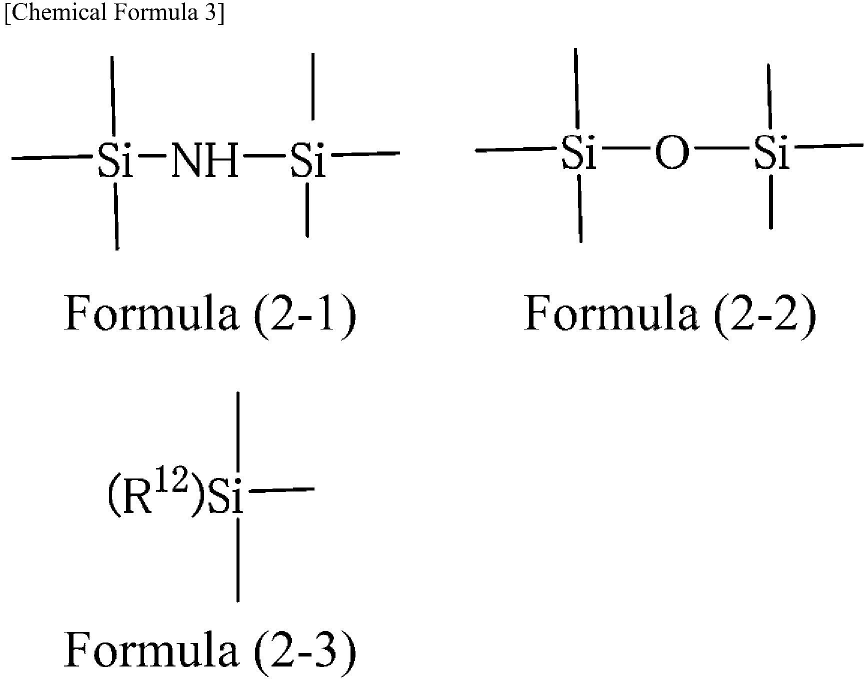

In the above formula, R¹² is an alkoxy group, and is, for example, a methoxy group or an ethoxy group. The above silane compounds used may be silane compounds manufactured by Shin-Etsu Chemical Co., Ltd.

The core-shell type metal oxide particle (C) is coated with the silane compound (B2) by the reaction of the above silane compound with hydroxyl groups on the surface of the core-shell type metal oxide particle (C). The reaction can be carried out at temperatures ranging from 20°C to the boiling point of the dispersing medium, e.g., from 20°C to 100°C. The reaction time can be from 0.1 to 6 hours.

The surface of the core-shell type metal oxide particle (C) is coated with the above silane compound at a coating amount of 0.1 silicon atoms/nm² to 6.0 silicon atoms/nm² in the silane compound. The silane compound at the corresponding coating amount may be added to a sol containing the core-shell type metal oxide particle (C) for the coating.

Water is necessary for hydrolysis of the above silane compound, and an aqueous solvent is used if the sol contains the aqueous solvent. It is possible to use water remaining in the solvent when the aqueous medium is replaced by the organic solvent. For example, water present in the range of 0.01 to 1 mass% may be used. In addition, the hydrolysis can be performed with or without a catalyst.

The case of hydrolysis without any catalyst is the case where the surface of the core-shell type metal oxide particle (C) is on the acidic side. In the case of hydrolysis with a catalyst, examples of the hydrolysis catalyst include a metal chelate compound, an organic acid, an inorganic acid, an organic base, or an inorganic base. Examples of the metal chelate compound as the hydrolysis catalyst include triethoxy mono(acetylacetonato)titanium or triethoxy mono(acetylacetonato)zirconium. Examples of the organic acid as the hydrolysis catalyst include acetic acid or oxalic acid. Examples of the inorganic acid as the hydrolysis catalyst include hydrochloric acid, nitric acid, sulfuric acid, hydrofluoric acid, or phosphoric acid. Examples of the organic base as the hydrolysis catalyst include pyridine, pyrrole, piperazine, or a quaternary ammonium salt. Examples of the inorganic base as the hydrolysis catalyst include ammonia, sodium hydroxide, or potassium hydroxide.

Examples of the organic acid include at least one organic acid selected from the group consisting of divalent aliphatic carboxylic acids, aliphatic oxycarboxylic acids, amino acids, and chelating agents. Examples of the divalent aliphatic carboxylic acid include oxalic acid, malonic acid, or succinic acid. Examples of the aliphatic oxycarboxylic acid include glycolic acid, lactic acid, malic acid, tartaric acid, or citric acid. Examples of the amino acid include glycine, alanine, valine, leucine, serine, or threonine. Examples of the chelating agent include ethylenediaminetetraacetic acid, L-aspartic acid-N,N-diacetic acid, or diethylenetriamine pentaacetic acid. Examples of the organic acid salt include an alkali metal salt, an ammonium salt, or an amine salt of each organic acid above. Examples of the alkali metal include sodium or potassium.

In the present invention, the core-shell type metal oxide particle (C) may be further coated with at least one organic acid or organic acid ester (B3) selected from the group consisting of acetic acid, benzoic acid, oxalic acid, malonic acid, succinic acid, glycolic acid, lactic acid, malic acid, tartaric acid, citric acid, or an alkyl, aryl, or arylalkyl ester thereof to produce a core-shell type metal oxide particle.

In the present invention, the core-shell type metal oxide particle (C) may be further coated with at least one phosphate (B4) selected from the group consisting of formulas (4) to (6) to produce a core-shell type metal oxide particle.

In formula (4) to formula (6), X₁, X₂, and X₃ each represent a C₂₋₂₀ alkylene group, f, h, and j each represent an integer from 1 to 100, e, g, and i each represent an integer from 1 to 3, and Y₁, Y₂, and Y₃ each represent a hydrogen atom, a C₁₋₂₀ alkyl group, a C₂₋₂₀ alkenyl group, or a (meth)acrylic group.

The phosphoric acid ester used may be a polyoxyethylene alkyl (C₆₋₂₀) ether phosphoric acid ester having a C₆₋₂₀ alkyl group.

The phosphoric acid ester used may preferably be a polyoxyethylene alkyl ether phosphoric acid ester. The phosphoric acid ester above can be a phosphoric acid ester in which the terminal alkyl group (Y₁) of the above formula (4) has 6 to 10 or 12 to 15 carbon atoms. These products used may be, for example, Phosphanol (trade name) RA-600, RS-610, RS-710, RP-710 manufactured by TOHO Chemical Industry Co., Ltd.

In the present invention, the core-shell type metal oxide particle (C) may be further coated with at least one surfactant (B5) selected from the group consisting of anionic surfactants, cationic surfactants, nonionic surfactants, and ampholytic surfactants.

Examples of the anionic surfactant used in the present invention include a sodium or potassium salt of fatty acid, an alkyl benzene sulfonate, a higher alcohol sulfate, a polyoxyethylene alkyl ether sulfate, an α-sulfo fatty acid ester, an α-olefin sulfonate, a mono-alkyl phosphate, or an alkane sulfonate.

Examples of the alkylbenzenesulfonate include a sodium salt, a potassium salt, or a lithium salt. Examples include sodium C₁₀-C₁₆ alkylbenzenesulfonate, C₁₀-C₁₆ alkylbenzenesulfonate, or sodium alkylnaphthalene sulfonate.

Examples of the higher alcohol sulfate include sodium dodecyl sulfate (sodium lauryl sulfate) with 12 carbon atoms, triethanolamine lauryl sulfate, or triethanol ammonium lauryl sulfate.

The polyoxyethylene alkyl ether sulfate is, for instance, sodium polyoxyethylene styrenylated phenyl ether sulfate, ammonium polyoxyethylene styrenylated phenyl ether sulfate, sodium polyoxyethylene decyl ether sulfate, ammonium polyoxyethylene decyl ether sulfate, sodium polyoxyethylene lauryl ether sulfate, ammonium polyoxyethylene lauryl ether sulfate, sodium polyoxyethylene tridecyl ether sulfate, or sodium polyoxyethylene oleyl cetyl ether sulfate.

The α-olefin sulfonate is, for instance, sodium α-olefin sulfonate. Examples of the alkane sulfonate include sodium 2-ethylhexyl sulfate.

Examples of the cationic surfactant used in the present invention include an alkyl trimethyl ammonium salt, a dialkyl dimethyl ammonium salt, an alkyl dimethyl benzyl ammonium salt, or an amine salt-based agent.

The alkyltrimethyl ammonium salt is a quaternary ammonium salt and has a chlorine or bromine ion as a counter ion. Examples of such a quaternary ammonium salt include dodecyltrimethylammonium chloride, cetyltrimethylammonium chloride, palm alkyltrimethylammonium chloride, or alkyl (C₁₆₋₁₈) trimethylammonium chloride.

The dialkyl dimethyl ammonium salt has two lipophilic main chains and two methyl groups. Examples of such a dialkyl dimethyl ammonium salt include bis(hydrogenated beef tallow)dimethyl ammonium chloride, didecyldimethylammonium chloride, di-palm alkyl dimethylammonium chloride, hardened beef tallow alkyl dimethylammonium chloride, or dialkyl (C₁₄₋₁₈) dimethylammonium chloride.

The alkyl dimethyl benzyl ammonium salt is a quaternary ammonium salt with one lipophilic main chain, two methyl groups, and a benzyl group, and examples include benzalkonium chloride. Examples include alkyl (C₈₋₁₈) dimethylbenzylammonium chloride.

The amine salt-based agent is those in which the hydrogen atom of ammonia is replaced by one or more hydrocarbon groups. Examples include N-methylbishydroxyethylamine fatty acid ester hydrochloride.

Examples of the amphoteric surfactant used in the present invention include an N-alkyl-β-alanine-type alkylamino fatty acid salt, an alkyl carboxybetaine-type alkyl betaine, or an N,N-dimethyldodecyl amine oxide-type alkyl amine oxide. Examples thereof include lauryl betaine, stearyl betaine, 2-alkyl-N-carboxymethyl-N-hydroxyethyl imidazolinium betaine, or lauryl dimethyl amine oxide.

The nonionic surfactant used in the present invention is selected from the group consisting of polyoxyethylene alkyl ethers, polyoxyethylene alkyl phenol ethers, alkyl glucosides, polyoxyethylene fatty acid esters, sucrose fatty acid esters, sorbitan fatty acid esters, polyoxyethylene sorbitan fatty acid esters, and fatty acid alkanolamides. Examples of the polyoxyethylene alkyl ether include polyoxyethylene dodecyl ether (polyoxyethylene lauryl ether), polyoxyalkylene lauryl ether, polyoxyethylene tridecyl ether, polyoxyalkylene tridecyl ether, polyoxyethylene myristyl ether, polyoxyethylene cetyl ether, polyoxyethylene oleyl ether, polyoxyethylene stearyl ether, polyoxyethylene behenyl ether, polyoxyethylene-2-ethylhexyl ether, or polyoxyethylene isodecyl ether.

Examples of the polyoxyethylene alkylphenol ether include polyoxyethylene styrenylated phenyl ether, polyoxyethylene nonylphenyl ether, polyoxyethylene distyrenylated phenyl ether, or polyoxyethylene tribenzylphenyl ether.

Examples of the alkyl glucoside include decyl glucoside or lauryl glucoside.

Examples of the polyoxyethylene fatty acid ester include polyoxyethylene monolaurate, polyoxyethylene monostearate, polyoxyethylene monooleate, polyethylene glycol distearate, polyethylene glycol diolate, or polypropylene glycol diolate.

Examples of the sorbitan fatty acid ester include sorbitan monocaprylate, sorbitan monolaurate, sorbitan monomyristate, sorbitan monopalmitate, sorbitan monostearate, sorbitan distearate, sorbitan tristearate, sorbitan monooleate, sorbitan triolate sorbitan triolate, sorbitan monosesquioxide, or an ethylene oxide adduct thereof.

Examples of the polyoxyethylene sorbitan fatty acid ester include polyoxyethylene sorbitan monolaurate, polyoxyethylene sorbitan monopalmitate, polyoxyethylene sorbitan monostearate, polyoxyethylene sorbitan tristearate, polyoxyethylene sorbitan monooleate, polyoxyethylene sorbitan triolate, or polyoxyethylene sorbitan triisostearate.

Examples of the fatty acid alkanolamide include coconut oil fatty acid diethanolamide, beef tallow fatty acid diethanolamide, lauric acid diethanolamide, or oleic acid diethanolamide.

Additional examples include polyoxyethylene polyoxypropylene glycol, polyoxyalkyl ether or polyoxyalkyl glycol (e.g., polyoxyethylene fatty acid ester), polyoxyethylene hardened castor oil ether, sorbitan fatty acid ester alkyl ether, alkyl polyglucoside, sorbitan monooleate, or sucrose fatty acid ester.

In the present invention, a core-shell type metal oxide sol with an average primary particle diameter of 10 to 20 nm can be obtained by dispersing the core-shell type metal oxide particle (C), as a dispersing matter, in a dispersant including water, alcohol, ether, ester, ketone, amide, hydrocarbon, or a combination thereof.

The dispersing medium used in the present invention is water or an organic solvent. Examples of the C₁₋₁₀ alcohol include methanol, ethanol, n-propanol, i-propanol, n-butanol, isobutanol, n-pentanol, ethylene glycol ethylene glycol monomethyl ether, propylene glycol monomethyl ether, propylene glycol monoethyl ether, or propylene glycol monopropyl ether.

The ether is a linear or cyclic C₃₋₃₀ aliphatic ether. Examples include diethyl ether or tetrahydrofuran.

The ester is a linear or cyclic C₂₋₃₀ ester. Examples include ethyl acetate, n-butyl acetate, sec-butyl acetate, methoxybutyl acetate, amyl acetate, n-propyl acetate, isopropyl acetate, ethyl lactate, butyl lactate, ethylene glycol monomethyl ether acetate, propylene glycol monomethyl ether acetate, propylene glycol monopropyl ether acetate, phenyl acetate phenyl lactate, or phenyl propionate.

The ketone is a linear or cyclic C₃₋₃₀ aliphatic ketone. Examples include methyl ethyl ketone, diethyl ketone, methyl propyl ketone, methyl isobutyl ketone, diisopropyl ketone, diisobutyl ketone, methyl amyl ketone, or cyclohexanone.

The amide is a C₃₋₃₀ aliphatic amide. Examples include dimethylacetamide, dimethylformamide, N-methylpyrrolidone, or N-ethylpyrrolidone.

The hydrocarbon is a linear or cyclic C₆₋₃₀ aliphatic or aromatic hydrocarbon. Examples include hexane, heptane, octane, nonane, decane, benzene, toluene, or xylene.

In the present invention, a composition (varnish) comprising the core-shell type metal oxide particle(s) and a thermosetting or photocurable resin is obtained.

The composition of the present invention can be further mixed with a thermosetting or photocurable resin to produce a varnish.

In the present invention, a composition for forming a coating containing the above-mentioned organic solvent sol(s) and organic resin is obtained. The composition for forming a coating can be made into a composition for forming a coating containing the core-shell type metal oxide particle(s) (C) and organic resin by removing the organic solvent in the organic solvent sol.

In the case of a thermosetting composition for forming a coating in the above composition for forming a coating, a thermosetting agent can be added in the range of 0.01 to 50 phr, or 0.01 to 10 phr to a resin containing a functional group such as an epoxy group or a (meth)acryloyl group. For example, 0.5 to 1.5 equivalents, preferably 0.8 to 1.2 equivalents, of the thermosetting agent can be included for the functional group such as an epoxy group or a (meth)acryloyl group. The equivalent amount of the thermosetting agent with respect to the curable resin is indicated by the ratio of the equivalent amount of the thermosetting agent with respect to the functional group.

Examples of the thermosetting agent include a phenolic resin, an amine-based curing agent, a polyamide resin, imidazoles, polymercaptan, an acid anhydride, a thermal radical generator, or a thermal acid generator. Particularly preferred is a radical generator-based curing agent, an acid anhydride-based curing agent, or an amine-based curing agent.

These thermosetting agents can be used by dissolving them in a solvent in the case of a solid one. However, the evaporation of the solvent causes a decrease in the density of the cured material and the formation of pores causes a decrease in strength and water resistance. For this reason, the curing agent itself should be liquid at room temperature and under normal pressure.

Examples of the phenolic resin include phenolic novolac resin or cresol novolac resin.

Examples of the amine-based curing agent include piperidine, N,N-dimethylpiperazine, triethylenediamine, 2,4,6-tris(dimethylaminomethyl)phenol, benzyl dimethylamine, 2-(dimethylaminomethyl)phenol, diethylenetriamine, triethylenetetetramine, tetraethylenepentamine, diethylaminopropylamine, N-aminoethylpiperazine, di(1-methyl-2-aminocyclohexyl)methane, mencendiamine, isofluorodiamine, diaminodicyclohexylmethane, 1,3-diaminomethylcyclohexane, xylenediamine, methaphenylenediamine, diaminodiphenylmethane, diaminodiphenylsulfone, 3,3'-diethyl-4,4'-diaminodiphenylmethane, or diethyltoluenediamine. Among them, a liquid one can be preferably used, including diethylenetriamine, triethylenetetramine, tetraethylenepentamine, diethylaminopropylamine, N-aminoethylpiperazine, di(1-methyl-2-aminocyclohexyl)methane, mencendiamine, isofluorodiamine, diaminodicyclohexylmethane, 3,3'-diethyl-4,4'-diaminodiphenylmethane, or diethyltoluene diamine.

The polyamide resin is formed by the condensation of dimeric acid and polyamine, and is a polyamide amine with primary and secondary amines in the molecule.

Examples of the imidazoles include 2-methylimidazole, 2-ethyl-4-methylimidazole, 1-cyanoethyl-2-undecylimidazolium trimellitate, or an epoxyimidazole adduct.

The polymercaptan, for example, has a mercaptan group at the end of a polypropylene glycol chain or has a mercaptan group at the end of a polyethylene glycol chain, and a liquid form is preferred.

A preferable acid anhydride-based curing agent is an anhydride of a compound having multiple carboxyl groups in one molecule. Examples of the acid anhydride-based curing agent include phthalic anhydride, trimellitic anhydride, pyromellitic anhydride, benzophenone tetracarboxylic anhydride, ethylene glycol bis-trimellitate, glycerol tris-trimellitate, maleic anhydride, tetrahydro phthalic anhydride, methyl tetrahydro phthalic anhydride, endomethylenetetrahydro phthalic anhydride, methyl endomethylenetetrahydro phthalic anhydride, methyl butenyl tetrahydro phthalic anhydride, dodecenyl succinic anhydride, hexahydro phthalic anhydride, methyl hexahydro phthalic anhydride, succinic anhydride, methylcyclohexenedicarboxylic anhydride, or chlorendic anhydride.

Among these, preferred is a liquid one at room temperature and at normal pressure, including methyl tetrahydro phthalic anhydride, methyl butenyl tetrahydro phthalic anhydride, dodecenyl succinic anhydride, methylhexahydro phthalic anhydride, or a mixture of hexahydro phthalic anhydride and methyl hexahydro phthalic anhydride. These liquid acid anhydrides have viscosities ranging from 10 mPa·s to 1000 mPa·s as measured at 25°C.

Examples of the thermal radical generator include 2,2'-azobis(isobutyronitrile), 2,2'-azobis(2-methylbutyronitrile), 2,2'-azobis(2,4-dimethylvaleronitrile), 4,4'-azobis(4-cyanovaleric acid), 2,2'-azobis(2-methylpropionic acid)dimethyl, 2,2'-azobis(2-methylpropionamidine)dihydrochloride, 2,2'-azobis[2-(2-imidazolin-2-yl)propane]dihydrochloride, *tert*-butyl hydroperoxide, cumene hydroperoxide, di-*tert*-butyl peroxide, dicumyl peroxide, or benzoyl peroxide. They can be obtained from TOKYO

### CHEMICAL INDUSTRY CO., LTD.

Examples of the thermal acid generator include a sulfonium salt or a phosphonium salt. A sulfonium salt is preferably used. For example, the following compounds can be used as examples.

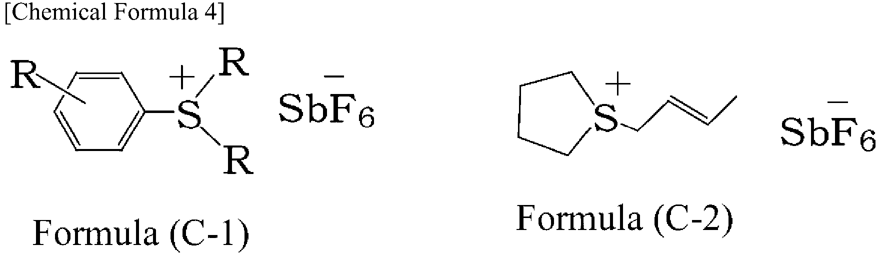

Examples of R include a C₁₋₁₂ alkyl group or a C₆₋₂₀ aryl group. Particularly preferred is a C₁₋₁₂ alkyl group.

In addition, when the above cured material is obtained, a curing aid may be used in combination, if appropriate. Examples of the curing aid include an organophosphorous compound (e.g., triphenylphosphine, tributylphosphine), a quaternary phosphonium salt (e.g., ethyltriphenylphosphonium bromide, methyltriphenylphosphonium diethyl phosphate), 1,8-diazabicyclo(5,4,0)undecan-7-ene, a salt of 1,8-diazabicyclo(5,4,0)undecan-7-ene and octylic acid, zinc octylate, or a quaternary ammonium salt (e.g., tetrabutylammonium bromide). Each curing aid can be included at a ratio of 0.001 to 0.1 parts by mass based on 1 part by mass of the curing agent.

The composition is obtained by mixing a resin and a curing agent optionally with a curing aid to make a thermosetting varnish. The mixing can be performed in a reaction vessel using a stirring blade or kneader.

The resulting thermosetting varnish is a composition for forming a curable coating and has an appropriate viscosity for use as a liquid sealant, for example. The liquid thermosetting composition for forming a coating can be prepared to any viscosity, and can be used as a transparent sealant for an LED or others to partially seal any site thereof by, for instance, casting, potting, dispensing, or printing. The liquid thermosetting composition is directly applied on an LED or the like in the liquid state in the manner described above, dried, and then cured to produce an epoxy resin cured body.

The thermosetting composition for forming a coating (thermosetting varnish) is applied to a base material and heated at a temperature of 80 to 200°C to obtain a cured product.

In the case of a photo-curable resin composition, a photo-curing agent (photo-radical generator, photo acid generator) can be added in the range of 0.01 to 50 phr, or 0.01 to 10 phr to a resin containing a functional group (e.g., an epoxy group or a (meth)acryloyl group) in the above composition for forming a coating. For example, 0.5 to 1.5 equivalents, preferably 0.8 to 1.2 equivalents, of the photo-curing agent (photo-radical generator, photo acid generator) can be included for the functional group such as an epoxy group or a (meth)acryloyl group. The equivalent amount of the photo curing agent with respect to the curable resin is indicated by the ratio of the equivalent amount of the photo curing agent with respect to the functional group.

The photo-radical generator is not particularly limited as long as radicals are generated directly or indirectly upon light irradiation.

Examples of the photo-radical generator as a photo-radical polymerization initiator include an imidazole compound, a diazo compound, a bisimidazole compound, an N-arylglycine compound, an azide compound, a titanocene compound, an aluminate compound, an organic peroxide, an N-alkoxypyridinium salt compound, or a thioxanthone compound.

Examples of the diazo compound include 1-diazo-2,5-diethoxy-4-p-tolylmercaptobenzeneborofluoride, 1-diazo-4-N,N-dimethylaminobenzene chloride, or 1-diazo-4-N,N-diethylaminobenzeneborofluoride.

Examples of the bisimidazole compound include 2,2'-bis(o-chlorophenyl)-4,5,4',5'-tetrakis(3,4,5-trimehoxyphenyl)1,2'-bisimidazole, or 2,2'-bis(o-chlorophenyl)4,5,4',5'-tetraphenyl-1,2'-bisimidazole.

Examples of the azide compound include p-azidobenzaldehyde, p-azidoacetophenone, p-azidobenzoic acid, p-azidobenzalacetophenone, 4,4'-diazidochalcone, 4,4'-diazidodiphenyl sulfide, or 2,6-bis(4'-azidobenzal)-4-methylcyclohexanone.

Examples of the titanocene compound include dicyclopentadienyl-titaniumdichloride, dicyclopentadienyl-titanium-bisphenyl, dicyclopentadienyl-titanium-bis(2,3,4,5,6-pentafluorophenyl), dicyclopentadienyl-titanium-bis(2,3,5,6-tetrafluorophenyl), dicyclopentadienyl-titanium-bis(2,4,6-trifluorophenyl), dicyclopentadienyl-titanium-bis(2,6-difluorophenyl), dicyclopentadienyl-titanium-bis(2,4-difluorophenyl), bis(methylcyclopentadienyl)-titanium-bis(2,3,4,5,6-pentafluorophenyl), bis(methylcyclopentadienyl)-titanium-bis(2,3,5,6-tetrafluorophenyl), bis(methylcyclopentadienyl)-titanium-bis(2,6-difluorophenyl), or dicyclopentadienyl-titaniumbis(2,6-difluoro-3-(1H-pyrrol-1-yl)-phenyl).

In addition, examples of the photo-radical generator include 1,3-di(*tert*butyldioxycarbonyl)benzophenone, 3,3',4,4'-tetrakis(*tert*-butyldioxycarbonyl)benzophenone, 3-phenyl-5-isoxazolone, 2-mercaptobenzimidazole, 2,2-dimethoxy-1,2-diphenylethan-1-one, 1-hydroxy-cyclohexyl-phenyl-ketone, or 2-benzyl-2-dimethylamino-1-(4-morpholinophenyl)-butanone.

Examples of the photo-radical polymerization agent available include Irgacure TPO (trade name) (ingredient: 2,4,6-trimethylbenzoyl diphenylphosphine oxide) (c1-1-1) manufactured by BASF; Omnirad 819 (trade name) (ingredient: bis(2,4,6-trimethylbenzoyl)phenylphosphine oxide) (c1-1-2) manufactured by IGM RESINS; or Irgacure 184 (trade name) (ingredient: 1-hydroxycyclohexylphenyl ketone) (c1-1-3) manufactured by IGM RESINS.

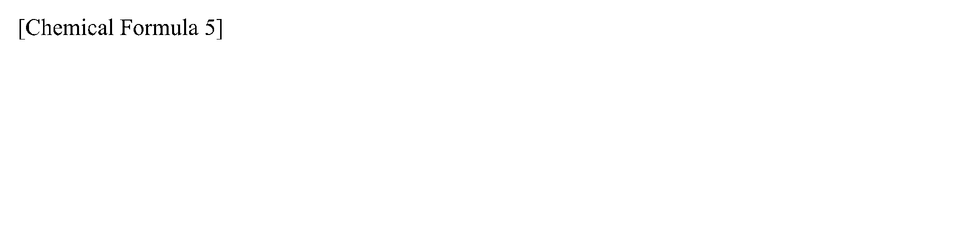

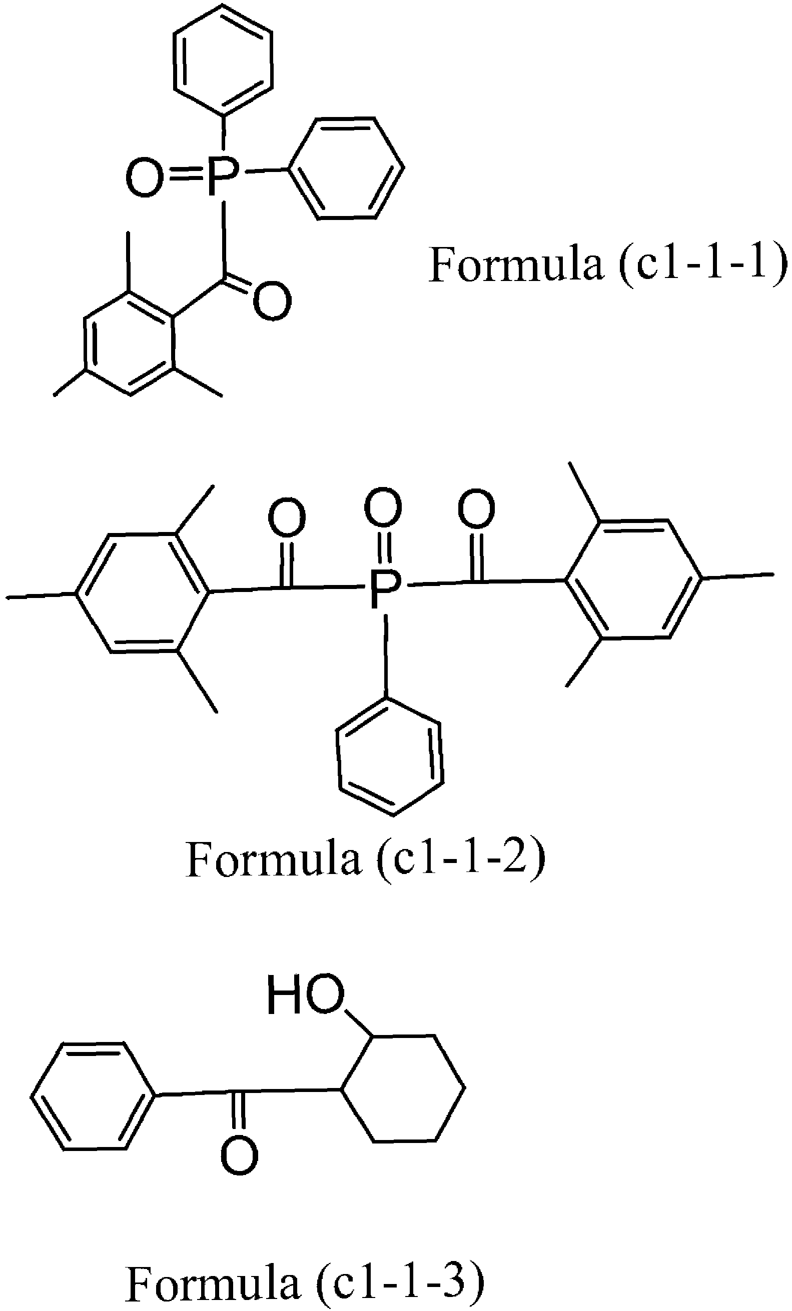

The photo acid generator is not particularly limited as long as an acid is generated directly or indirectly upon light irradiation.

Specific examples of the photo acid generator that can be used include a triazine compound, an acetophenone derivative compound, a disulfone-based compound, a diazomethanebased compound, a sulfonic acid derivative compound, an onium salt (e.g., an iodonium salt, a sulfonium salt, a phosphonium salt, a selenium salt), a metallocene complex, or an iron arene complex.

The onium salt may be used as the above photo acid generator. Examples of the iodonium salt include diphenyliodonium chloride, diphenyliodonium trifluoromethanesulfonate, diphenyliodonium mesylate, diphenyliodonium tosylate, diphenyliodonium bromide, diphenyliodonium tetrafluoroborate, diphenyliodonium hexafluoroantimonate, diphenyliodonium hexafluoroarsenate, bis(p-*tert*-butylphenyl)iodonium hexafluorophosphate, bis(p-*tert-*butylphenyl)iodonium mesylate, bis(p-*tert*-butylphenyl)iodonium tosylate, bis(p-*tert-*butylphenyl)iodonium trifluoromethanesulfonate, bis(p-*tert*-butylphenyl)iodonium tetrafluoroborate, bis(p-*tert*-butylphenyl)iodonium chloride, bis(p-chlorophenyl)iodonium chloride, or bis(p-chlorophenyl)iodonium tetrafluoroborate. Additional examples include a bis(alkylphenyl)iodonium salt (e.g., bis(4-t-butylphenyl)iodonium hexafluorophosphate), an alkoxycarbonylalkoxy-trialkylaryliodonium salt (e.g., 4-[(1-ethoxycarbonyl-ethoxy)phenyl]-(2,4,6-trimethylphenyl)-iodonium hexafluorophosphate), or a bis(alkoxyaryl)iodonium salt (e.g., a bis(alkoxyphenyl)iodonium salt such as (4-methoxyphenyl)phenyliodonium hexafluoroantimonate).

Examples of the sulfonium salt include a triphenylsulfonium salt (e.g., triphenylsulfonium chloride, triphenylsulfonium bromide, tri(p-methoxyphenyl)sulfonium tetrafluoroborate, tri(p-methoxyphenyl)sulfonium hexafluorophosphonate, tri(p-ethoxyphenyl)sulfonium tetrafluoroborate, triphenylsulfonium triflate, triphenylsulfonium hexafluoroantimonate, triphenylsulfonium hexafluorophosphate), (4-phenylthiophenyl)diphenylsulfonium hexafluoroantimonate, (4-phenylthiophenyl)diphenylsulfonium hexafluorophosphate, bis[4-(diphenylsulfonio)phenyl]sulfide-bis-hexafluoroantimonate, bis[4-(diphenylsulfonio)phenyl]sulfide-bis-hexafluorophosphate, (4-methoxyphenyl)diphenylsulfonium hexafluoroantimonate).

Examples of the phosphonium salt include triphenylphosphonium chloride, triphenylphosphonium bromide, tri(p-methoxyphenyl)phosphonium tetrafluoroborate, tri(p-methoxyphenyl)phosphonium hexafluorophosphonate, tri(p-ethoxyphenyl)phosphonium tetrafluoroborate, 4-chlorobenzenediazonium hexafluorophosphate, or benzyltriphenylphosphonium hexafluoroantimonate.

Other examples include a selenium salt (e.g., triphenylselenium hexafluorophosphate) or a metallocene complex (e.g., (η5 or η6-isopropylbenzene)(η5-cyclopentadienyl)iron(II) hexafluorophosphate).

The following compounds can also be each used as a photo acid generator.

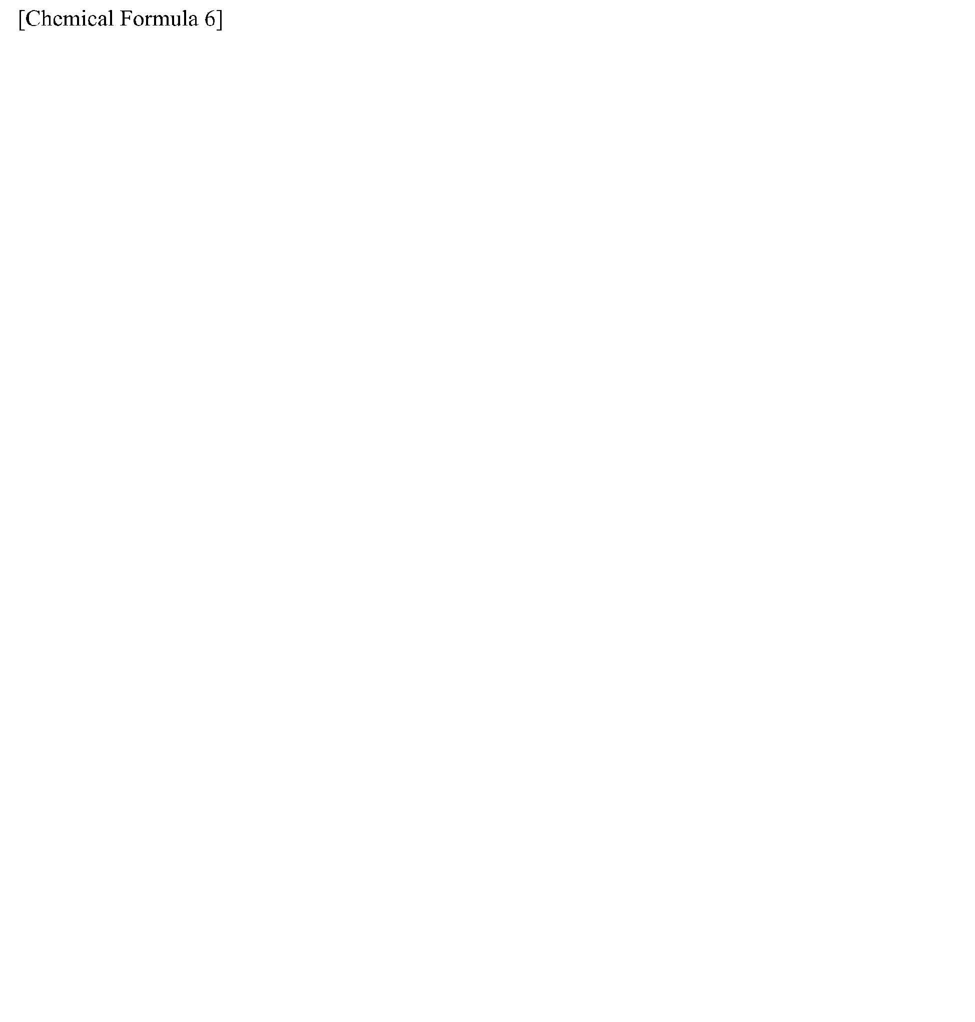

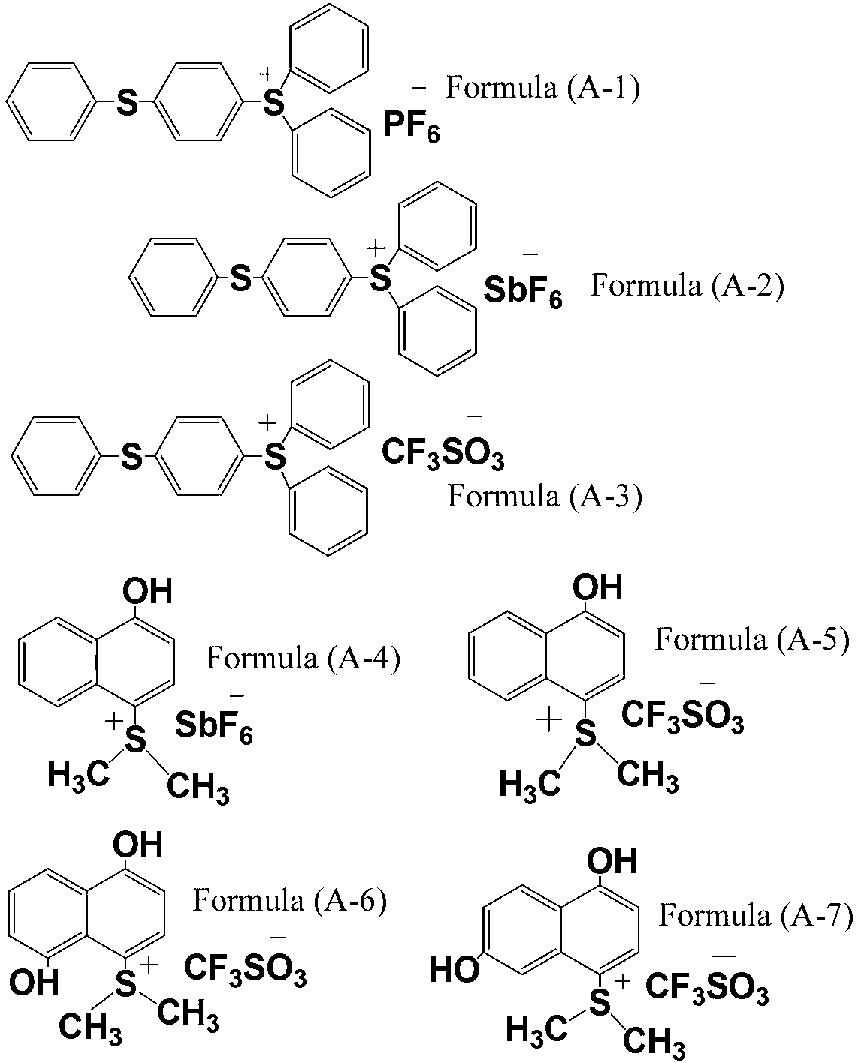

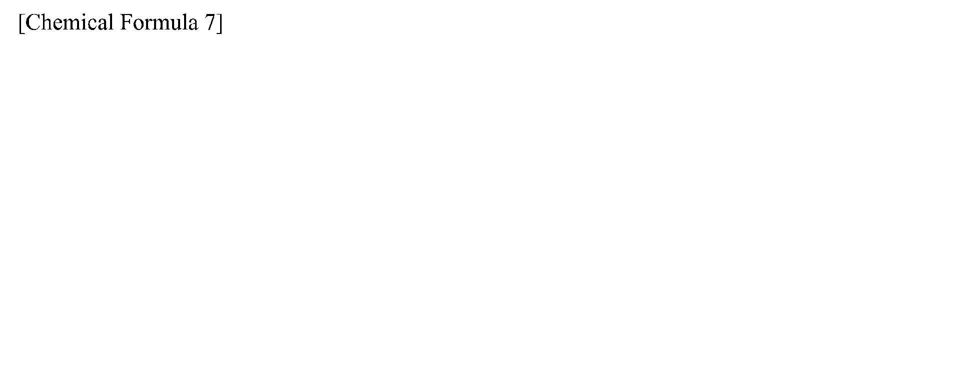

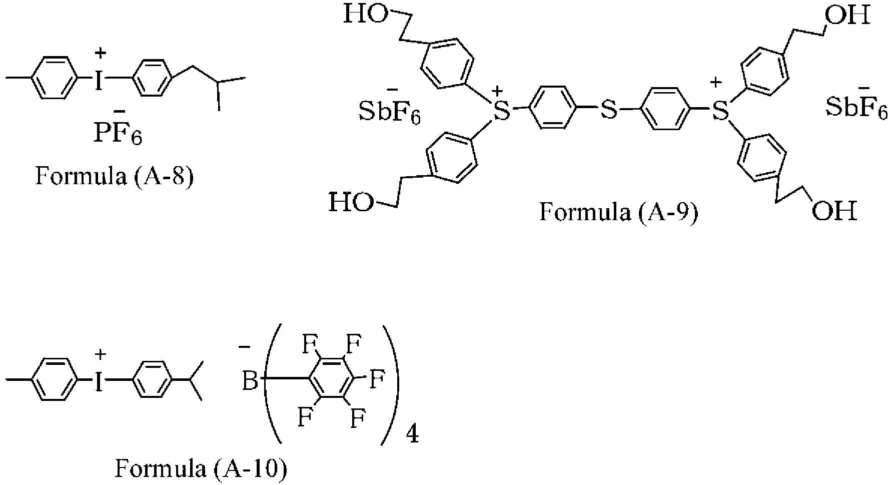

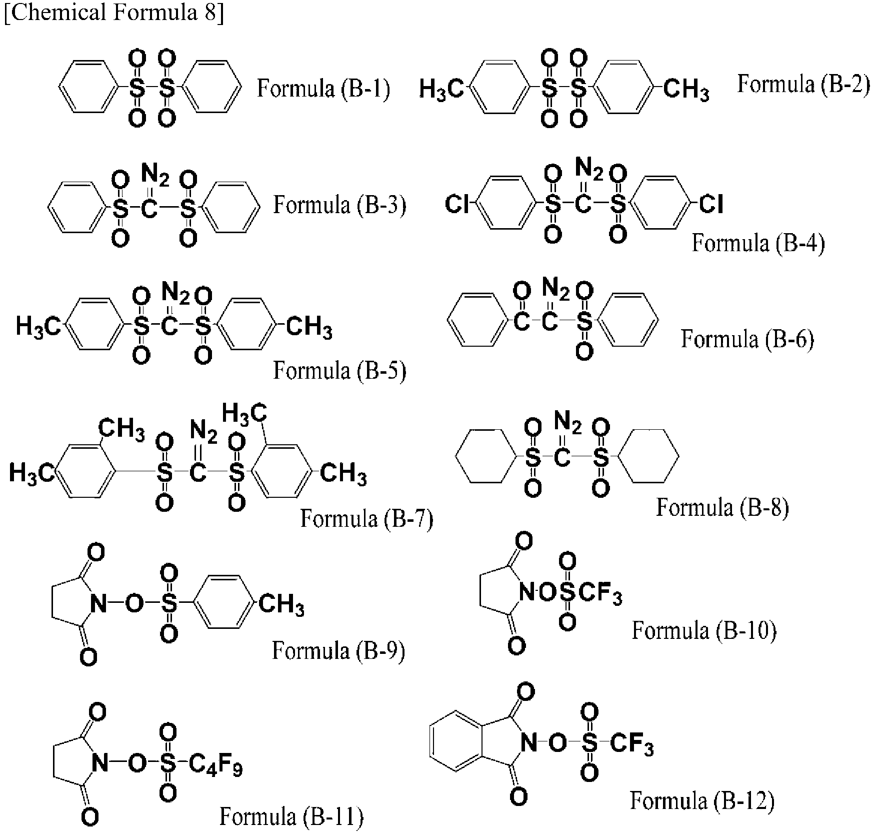

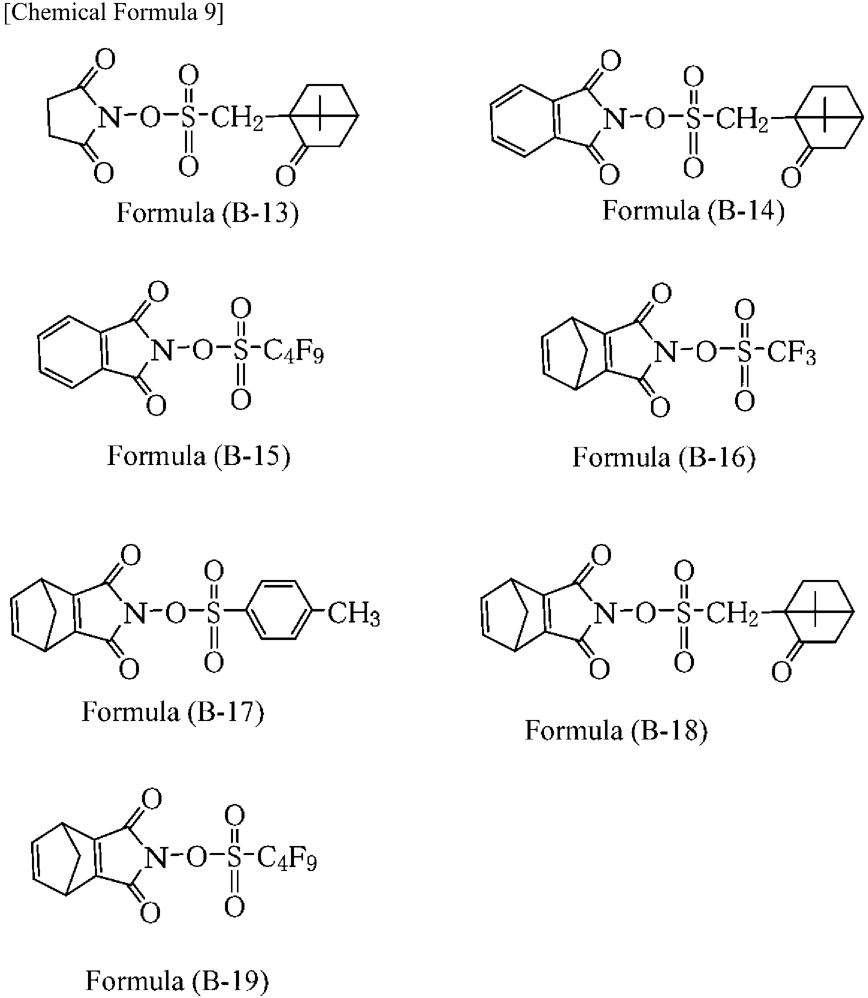

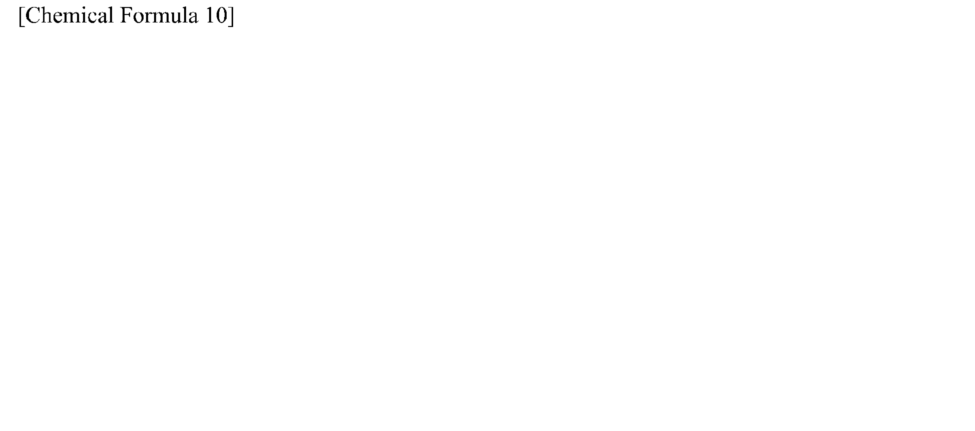

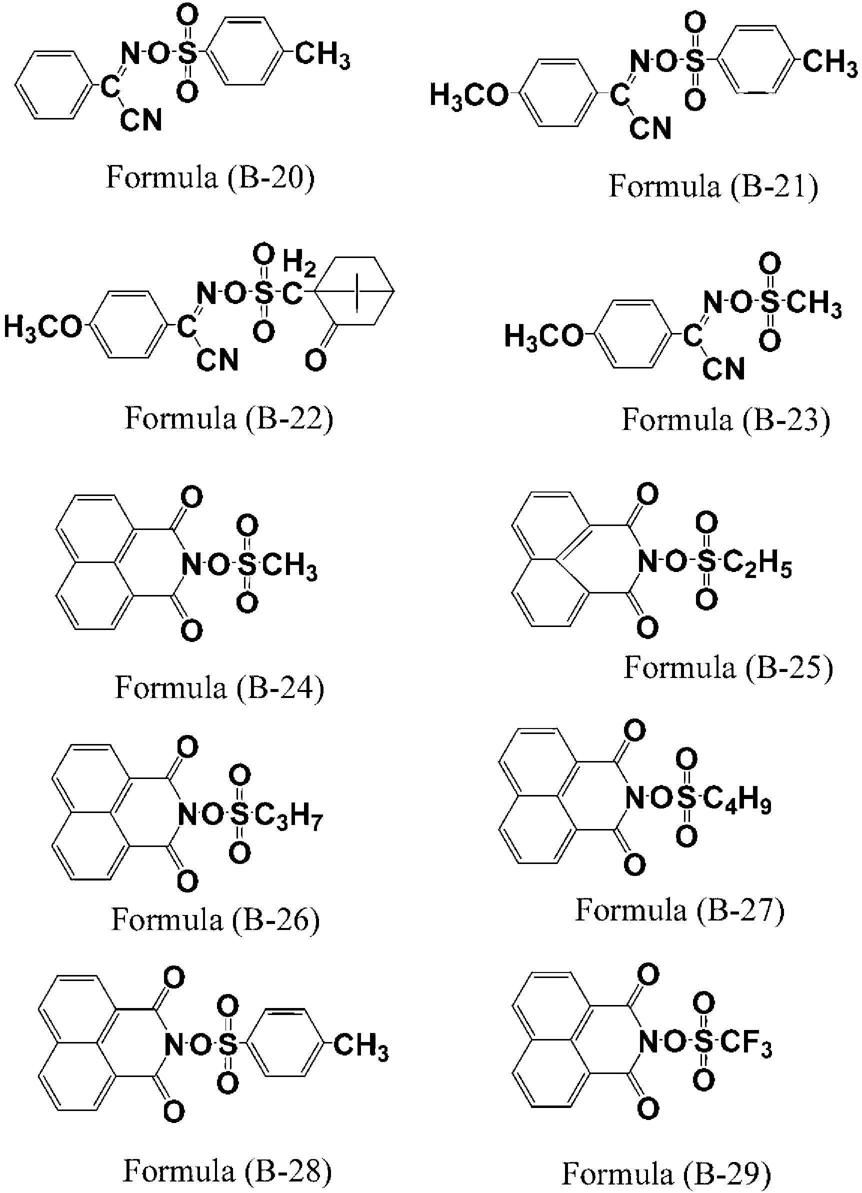

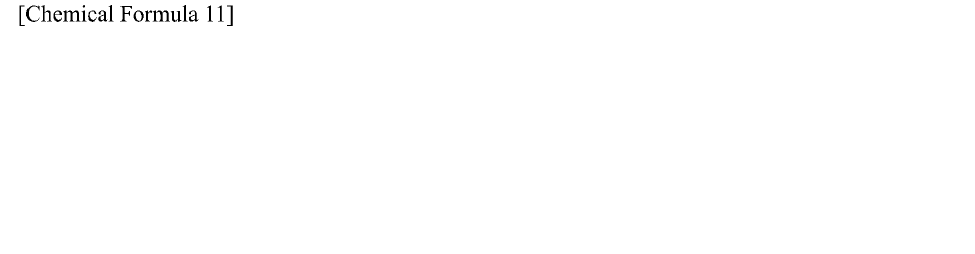

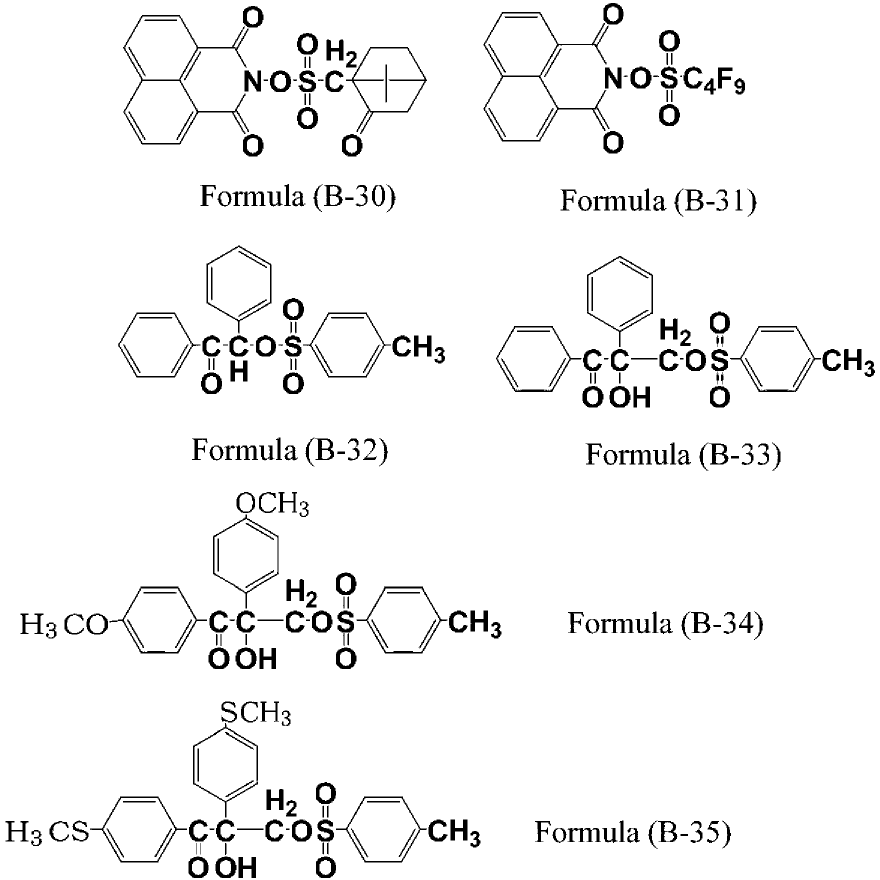

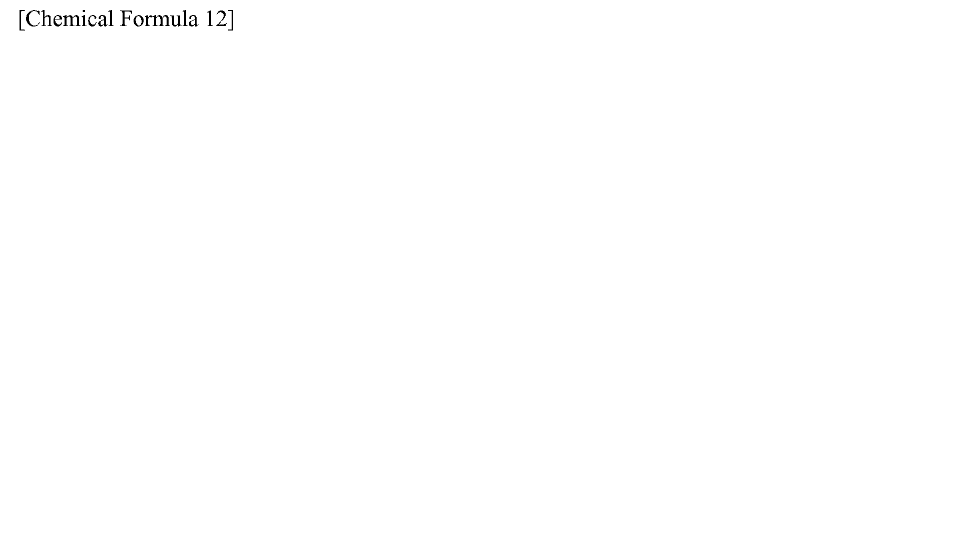

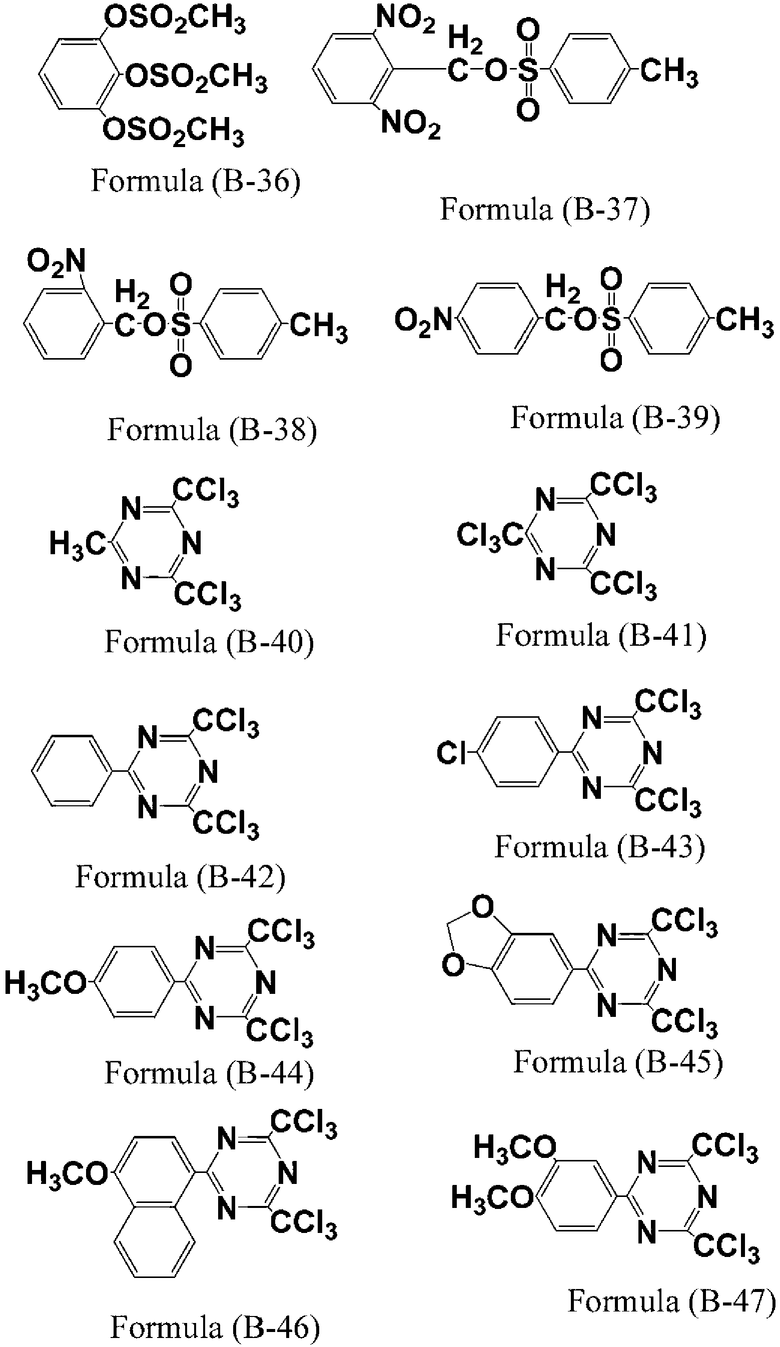

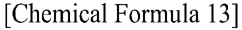

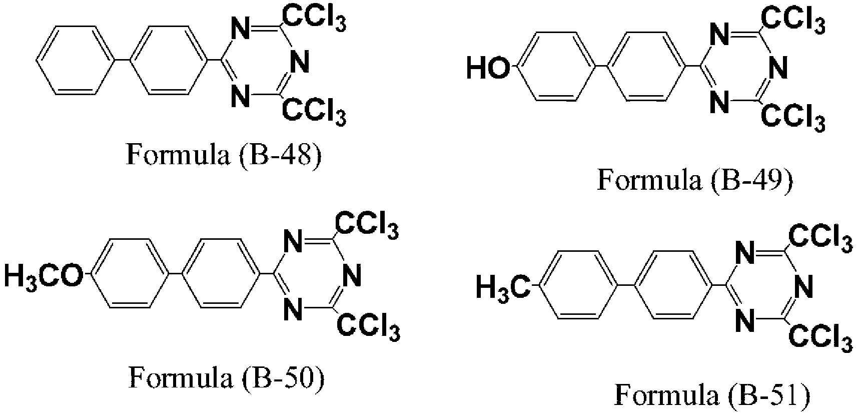

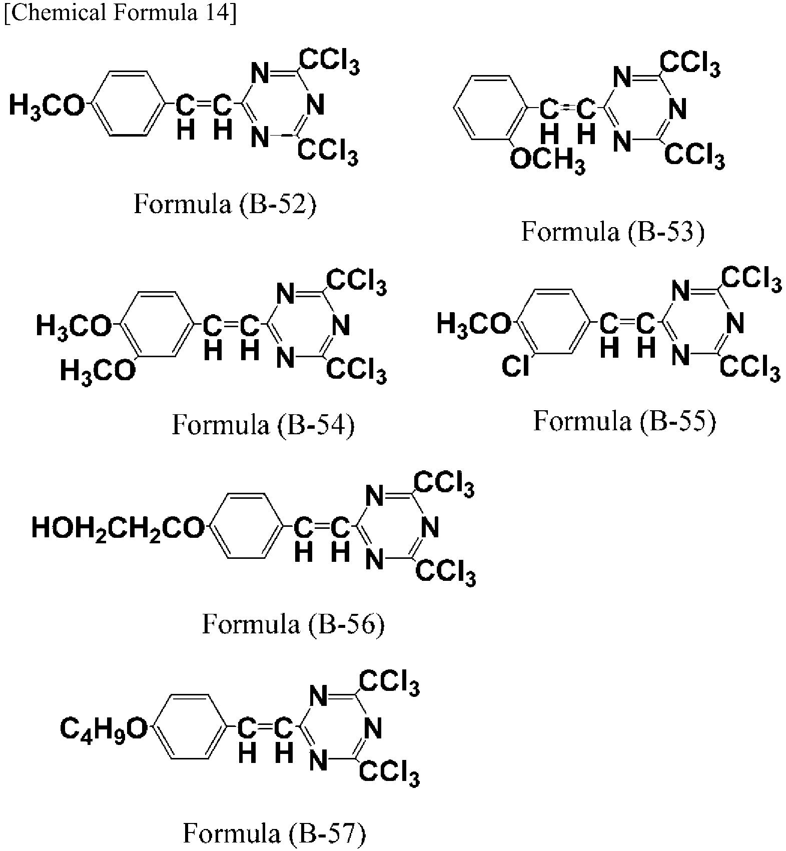

The photo acid generator is preferably a sulfonium salt compound or an iodonium salt compound. Examples of the anion species thereof include CF₃SO₃⁻, C₄F₉SO₃⁻, C₈F₁₇SO₃⁻, a camphorsulfonic acid anion, a tosylic acid anion, BF₄⁻, PF₆⁻, AsF₆⁻, or SbF₆⁻. Particularly preferred is a strongly acidic anionic species (e.g., phosphorus hexafluoride, antimony hexafluoride).

The composition for forming a coating of the present invention may contain a conventional additive(s) as needed. Examples of such an additive include a pigment, a colorant, a thickener, a sensitizer, a defoamer, a coating performance improver, a lubricant, a stabilizer (e.g., an antioxidant, a heat stabilizer, a light stabilizer), a plasticizer, a dissolution accelerator, a filler, and/or an antistatic agent. These additives may be used singly or two or more kinds thereof may be used in combination.

Examples of the method of applying a composition for forming a coating of the present invention include flow coating, spin coating, spray coating, screen printing, casting, bar coating, curtain coating, roll coating, gravure coating, dipping, or slitting.

In the present invention, a varnish (composition for forming a coating) may be applied onto a substrate and then cured by light irradiation or thermosetting. It can also be heated before and/or after light irradiation.

The thickness of the coating film depends on application of the resulting cured product and can be selected from a range of about 0.01 µm to 10 mm. For example, in the case of use for photoresists, the thickness may be from 0.05 to 10 µm (especially from 0.1 to 5 µm). In the case of use for printed wiring boards, the thickness can be from about 5 µm to 5 mm (especially from 100 µm to 1 mm). In the case of use for optical thin films, the thickness can be from about 0.1 to 100 µm (especially from 0.1 to 10 µm).

When a transparent film is obtained, the visible light transmittance of the film can be 80% or more or 90% or more, typically from 90 to 96%.

When a photo acid generator is used, the light for irradiation or exposure may be, for example, gamma rays, X-rays, UV light, or visible light, and is usually visible light or UV light, and may be often especially UV light. The wavelength of the light is, for example, from 150 to 800 nm, preferably from 150 to 600 nm, and more preferably from 150 to 400 nm. The irradiation light intensity varies depending on the thickness of the coating film, but can be from 2 to 20,000 mJ/cm² and preferably from 5 to 5,000 mJ/cm². The light source can be selected according to the type of light for exposure. For example, in the case of UV light, it is possible to use, for instance, a low-pressure mercury lamp, a high-pressure mercury lamp, an ultra high-pressure mercury lamp, a deuterium lamp, a halogen lamp, an LED lamp, or a laser beam (e.g., a heliumcadmium laser, an excimer laser). Such light irradiation causes the curing reaction of the above composition to proceed.

Heating of the coating film in the case of using a thermal acid generator and/or in need after light irradiation while using a photo acid generator is carried out, for example, at 60 to 350°C and preferably about 100 to 300°C. The heating time can be selected from a range of 3 seconds or more (e.g., 3 seconds to 5 hours), e.g., 5 seconds to 2 hours, preferably 20 seconds to 30 minutes, and usually 1 minute to 3 hours (e.g., 5 minutes to 2.5 hours).

Further, when a pattern or image is formed (for example, when a printed wiring board is manufactured), the pattern may be exposed on the coating film formed on the substrate. This pattern exposure may be performed by laser beam scanning or by light irradiation through a photomask. The pattern or image can be formed by developing (or dissolving), with a developer, the non-exposed areas (unexposed areas) generated by such pattern exposure.

The developer used may be an alkaline solution or an organic solvent.

Examples of the alkaline solution include an aqueous solution of alkali metal hydroxide (e.g., potassium hydroxide, sodium hydroxide, potassium carbonate, sodium carbonate), an aqueous solution of quaternary ammonium hydroxide (e.g., tetramethylammonium hydroxide, tetraethylammonium hydroxide, choline), or an aqueous amine solution containing, for example, ethanolamine, propylamine, or ethylenediamine.

The above alkaline developer is generally an aqueous solution in an amount of 10 mass% or less and preferably from 0.1 to 3.0 mass%. In addition, the above developer may be added an alcohol compound and/or a surfactant, and be then used. Each of them is preferably from 0.05 to 10 parts by mass based on 100 parts by mass of the developer. Among them, the tetramethylammonium hydroxide used may be a 0.1-2.38 mass% aqueous solution.

In addition, the developer organic solvent used may be a common organic solvent. Examples include acetone, acetonitrile, toluene, dimethylformamide, methanol, ethanol, isopropanol, propylene glycol methyl ether, propylene glycol ethyl ether, propylene glycol propyl ether, propylene glycol butyl ether, propylene glycol methyl ether acetate, propylene glycol ethyl ether acetate, propylene glycol propyl ether acetate, propylene glycol butyl ether acetate, ethyl lactate, or cyclohexanone. They can be used singly or a mixture of two or more of these may be used. In particular, propylene glycol methyl ether, propylene glycol methyl ether acetate, ethyl lactate, or the like may be preferably used.

In the present invention, an adhesion promoter can be added to improve the adhesion to the substrate after development. Examples of the adhesion promoter include: chlorosilanes (e.g., trimethylchlorosilane, dimethylvinylchlorosilane, methyldiphenylchlorosilane, chloromethyl dimethylchlorosilane); alkoxysilanes (e.g., trimethylmethoxysilane, dimethyldiethoxysilane, methyldimethoxysilane, dimethylvinylethoxysilane, diphenyldimethoxysilane, phenyltriethoxysilane); silazanes (e.g., hexamethyldisilazane, N,N'-bis(trimethylsilyl)urea, dimethyltrimethylsilylamine, trimethylsilylimidazole); silanes (e.g., vinyl trichlorosilane, 3-chloropropyltrimethoxysilane, 3-aminopropyltrimethoxysilane, 3-methacryloxypropyltrimethoxysilane, 3-glycidoxypropyltrimethoxysilane, 3-(N-piperidinyl)propyltrimethoxysilane); heterocyclic compounds (e.g., benzotriazole, benzimidazole, indazole, imidazole, 2-mercapto-benzimidazole, 2-mercapto-benzothiazole, 2-mercaptobenzoxazole, urazole, thiourazole, thiouracil, mercaptoimidazole, mercaptopyrimidine); urea (e.g., 1,1-dimethylurea, 1,3-dimethylurea); or thiourea compounds. Among the adhesion promoters, one or two or more kinds thereof may be used in combination. The amount of these adhesion promoters added is usually 18 mass% or less, preferably from 0.0008 to 9 mass%, and more preferably from 0.04 to 9 mass% in the solid content.

The present invention may contain a sensitizer. Examples of the available sensitizer include anthracene, phenothiazine, perylene, thioxanthone, or benzophenone thioxanthone. Further, examples of the sensitizing dye include a thiopyrylium salt-based dye, a melocyanine dye, a quinoline-based dye, a styrylquinoline-based dye, a ketocoumarin-based dye, a thioxanthene-based dye, a xanthene-based dye, an oxonol-based dye, a cyanine-based dyes, a rhodamine-based dye, or a pyrylium salt-based dye. Particularly preferred is an anthracene-based sensitizer. Sensitivity is dramatically improved when the sensitizer is used in combination with a cationic curing catalyst (radiosensitive cationic polymerization initiator). The sensitizer also has a function of initiating radical polymerization. In the hybrid type, in which the cationic curing system and the radical curing system in the present invention are used together, the catalyst species can be simplified. Dibutoxyanthracene or dipropoxyanthraquinone, for example, is effective as a specific anthracene compound. The amount of sensitizer added is from 0.01 to 20 mass% and preferably from 0.01 to 10 mass% in the solid content.

The composition of the present invention may be photo- or thermo-cured using a photo-radical generator, thermal radical generator, photo acid generator, or thermal acid generator. In the case of using a photo acid generator or thermal acid generator, for example, any epoxy curing agent (e.g., an amine and/or an acid anhydride) that is normally used is not used, or even if used, the content is extremely low. Therefore, the storage stability of the composition of the present invention is improved.

Curing by UV irradiation can be applied to materials (equipment) that are sensitive to heat.

Thermosetting and photo-curing materials using the composition for forming a coating of the present invention are characterized by rapid hardening, transparency, and small curing shrinkage. Thus, they can be used for coating and bonding electronic components, optical components (antireflective coatings), and precision mechanical components.

The above composition (varnish) can be suitably used as hard coating agents or compositions for nanoimprinting.

In addition, other applications include cell phones, optical elements (e.g., camera lenses, light emitting diodes (LEDs), semiconductor lasers (LDs)), LCD panels, biochips, parts (e.g., camera lenses, prisms), magnetic components of hard disks in personal computers, pickup parts (a part that captures the optical information reflected from the disc) in CD and DVD players, speaker cones and coils, motor magnets, circuit boards, electronic components, or internal parts of engines of automobiles. The above composition (varnish) can be used for bonding thereof.

The above composition (varnish) may be for hard coatings to protect a surface of automobile bodies, lamps, electrical appliances, construction materials, plastics, and so on. This can be applied to, for example, automobile and motorcycle bodies, headlight lenses and mirrors, plastic lenses of glasses, cellular phones, game consoles, optical films, ID cards, and so on.

The above composition (varnish) may be for ink materials used for printing on metals (e.g., aluminum) or plastics. Examples of the application include printing inks for cards (e.g., credit cards, membership cards), switches and keyboards of electrical appliances and office automation equipment, or inkjet printer inks for CDs, DVDs, and other products.

Examples include technologies to create complex three-dimensional objects by curing resin in combination with 3D CAD, applications to optical modeling (e.g., model manufacturing of an industrial product), or applications to optical fiber coating, bonding, optical waveguide, thick film resist, and so on.

The composition for forming a coating according to the present invention can be suitably used as insulating resins for electronic materials (e.g., anti-reflective films, semiconductor encapsulating materials, adhesives for electronic materials, diffractive optical element materials, printed circuit board materials, interlayer insulating film materials, sealants for power modules) and/or insulating materials used in high voltage equipment (e.g., generator coils, transformer coils, gas insulated switchgears).

### Examples

Hereinafter, the present invention is described in more detail based on Reference Examples, Production Examples, Examples, and Comparative Examples. The present invention, however, is not limited to these Examples.

### [Total metal oxide concentration]

The sol was weighed using a crucible and pre-dried by heating at 110°C for 30 minutes to remove the solvent. This crucible was fired at 600°C for 30 minutes. The crucible was weighed and the total metal oxide concentration (mass%) was calculated from the mass of the residue.

### [Average particle diameter by dynamic light scattering (dynamic light scattering particle diameter)]

The sol was diluted with a dispersing solvent and measured with a dynamic light scattering instrument: trade name: Zetasizer, manufactured by Malvern Instruments Ltd. using the parameters of the solvent. The Z-average particle diameter was used as the dynamic light scattering particle diameter.

### [Average primary particle diameter]

Particles were imaged using a transmission electron microscope (JEM-F200, manufactured by JEOL Ltd.). The particle diameter distribution of 500 arbitrary particles was obtained, and the circle equivalent average primary particle diameter, aspect ratio, and standard deviation σ were calculated.

### [TiO₂ mass ratio in particle]

The sol was dried on a hot plate at 110°C and ground for 15 minutes using a mortar and pestle to obtain dry powder. This dry powder was subjected to measurement using an X-ray fluorescence spectrometer (Supermini 200, manufactured by Rigaku Co., Ltd.) to calculate the mass ratio of TiO₂ in the particle (mass%).

### [X-ray diffraction measurement]

The sol was dried on a hot plate at 110°C and ground for 15 minutes using a mortar and pestle to obtain dry powder. The dry powder was measured with XRD equipment (trade name MiniFlex 600, manufactured by Rigaku) to obtain an X-ray diffraction pattern.

### [Particle refractive index]

The refractive index of particles in the sol was measured by the following procedures i) to iii).

### i) Preparing varnish blended with particle methanol dispersion

First, 20.00 g of 3-glycidoxypropyltrimethoxysilane (trade name: SILQUEST A-187T, manufactured by Momentive) was weighed in a polyethylene container, 18.57 g of methanol and 4.57 g of a 0.01 N hydrochloric acid solution were added thereto, and the mixture was stirred at room temperature for 5 hours. Next, 6.00 g of a previously prepared methanol solution containing aluminum 2,4-pentanedioic acid (Al(acac)₃) (10 mass% Al(acac)₃) was added as a curing agent, and the mixture was stirred for 10 minutes to prepare a partial hydrolysate of 3-glycidoxypropyltrimethoxysilane (concentration: 43 mass%).

Then, 0.25 g of methanol solution (10 mass% L-7604) containing the prepared partial hydrolysate of 3-glycidoxypropyltrimethoxysilane, particle-dispersed sol, water, methanol, and a leveling agent (DOWSIL trade name: L-7604) was weighed into a brown bottle and the mixture was stirred at room temperature for 30 minutes, so that the total amount was 25.00 g and the final solvent composition had a mass ratio of water/total solvent other than water of 1/4 and the amount of particles blended in the organic solvent-dispersed sol was 50 phr, 100 phr, or 150 phr. In this way, the varnish blended with the particle organic solvent-dispersed sol (solid content: 10.0 mass%; the amount of particles: 50 phr, 100 phr, or 150 phr) was prepared.

### ii) Preparing particle-blended film

About 0.5 mL of the varnish blended with the particle methanol-dispersed solution obtained in i) was added dropwise onto a UV-O₃-treated Si substrate, and a spin coater (trade name: Opticoat MS-B100; MIKASA CO., LTD.) was used for coating at a post-coating film thickness of 1.0 µm. A particle-blended film (the amount of particles blended: 50 phr, 100 phr, or 150 phr) was then prepared by heating on a hot plate at 80°C for 5 minutes and heat-treating in an oven at 120°C for 1 hour.

### iii) Measuring refractive index of particle-blended film and calculating refractive index of particles

The refractive index of each particle-blended film (the amount of particles blended: 50 phr, 100 phr, or 150 phr) obtained in ii) was measured with an ellipsometer (multiple-incidence angle spectroscopic ellipsometer, trade name VASE, manufactured by J.A. Woollam Japan Co., Ltd.). In addition, the refractive index of a particle-free film prepared in the same way using the partial hydrolysate of 3-glycidoxypropyltrimethoxysilane alone was also measured. The refractive indices of the measured blended films were plotted against the amount of particles blended, and the particle refractive indices were obtained by extrapolation such that the amount of particles blended was 100 mass%.

### [Evaluating light resistance of dispersion]

Each sample was prepared by mixing, a dispersion containing metal oxide particles at 0.5 mass% solid content in water/methanol at a 1/1 mass ratio, and a solution containing 0.02 mass% dye (sunset yellow) in glycerin, at a 1/3 mass ratio. This was placed in a quartz cell, which had a length of 1 mm, a width of 1 cm, and a height of 5 cm, and then sealed. Next, a UV lamp (trade name: SLUV-6, manufactured by AS ONE) with a selected wavelength range of I-line (wavelength: 365 nm) was used to irradiate the sample with UV light at an irradiation intensity of 0.4 mW/cm² (in terms of intensity at a wavelength of 365 nm) for 180 minutes.

Before and after UV irradiation, the absorbance (A0 and A180) of the sample at a wavelength of 490 nm was measured with a UV-visible spectrophotometer (trade name: UV-3600, manufactured by Shimadzu Corporation), and the percentage of dye fading was calculated using the formula below. (A0) indicates the absorbance at a wavelength of 490 nm before irradiation with I-line (365 nm wavelength), and (A180) indicates the absorbance at 490 nm after irradiation with I-line (365 nm wavelength) for 180 minutes.$Percentage of dye fading \left(%\right) = \left(A180\right) / \left(A0\right) \times 100 .$

Further, the photocatalytic activity of the particle was evaluated based on the following criteria. The lower the percentage of dye fading, the more the photocatalytic activity of the particle is suppressed.
○: Percentage of dye fading is less than 10%.
×: Percentage of dye fading is 10% or more.

In addition, each cured film obtained in the Examples and Comparative Examples was formed and evaluated by the following procedures.

### (1) Film thickness and film refractive index

The reflectivity of each cured film formed on a glass substrate was measured using a reflectivity meter (trade name: USPM-RU, manufactured by Olympus Corporation). The measured reflectivity was used to calculate the film thickness and refractive index of the cured film by using optical simulation.

### (2) Haze

The presence or absence of fogging of each cured film formed on a glass substrate was examined with a spectroscopic haze meter (trade name: SH7000, manufactured by NIPPON DENSHOKU INDUSTRIES Co., Ltd.)

### (3) Light resistance

A UV fluorescent lamp accelerated weathering tester (trade name: QUV, manufactured by Q-Lab) equipped with a UV-A lamp was used to irradiate a cured film formed on a glass substrate with UV light for 6 hours under conditions at 0.89 W/m² (340 nm). The criteria are as follows.
When the initial film thickness is d0 and the film thickness after light resistance evaluation is d,$Change in film thickness \left(%\right) = \left(d0-d\right) / d 0 \times 100 .$
○: Change in film thickness is less than 5%.
×: Change in film thickness is 5% or more.

### (4) Imprintability

The varnish blended with the dispersion containing the particles in propyleneglycol monomethyl ether (hereinafter, PGME) was spin-coated on a quartz substrate and heated on a hot plate at 100°C for 2 minute to produce a desolvated film. The obtained film was irradiated with UV light by using a nanoimprinter (trade name: NM-0801HB, manufactured by MEISYO KIKO) with a release-treated quartz mold (trade name: DTM-2-1, manufactured by KYODO INTERNATIONAL, INC.) while being pressed on. The film was cured while transferring an uneven pattern. The mold was detached from the obtained cured film, and the pattern formed was observed by SEM (trade name JSM-6010LV, JEOL Ltd.). The criteria are as follows.
○: Pattern is transferred, indicating good imprintability
×: Pattern is not transferred, indicating poor imprintability

### (Production Example 1): Preparing titanium oxide-tin dioxide composite metal oxide particle (a1) as core

First, 171.3 g of 35 mass% aqueous tetraethylammonium hydroxide solution was dissolved in 130 g of pure water. Next, 5.2 g of metastannic acid (containing 4.4 g in terms of SnO₂), 166.7 g of titanium tetraisopropoxide (containing 46.8 g in terms of TiO₂), and 38.5 g of oxalic acid dihydrate were added under stirring. After holding the mixed solution at 80°C for 2 hours, the solution was held at 95°C for 5 hours while pure water was added to keep the liquid level constant, to prepare a dispersion containing titanium oxide-tin dioxide composite metal oxide particles (a1) that is to be served as the core. The obtained sol had a pH of 4.6, a total metal oxide concentration (TiO₂, and SnO₂) of 9.4 mass%, an average particle diameter of 12 nm by dynamic light scattering, an average primary particle diameter of 8 nm by transmission electron microscopy, and an aspect ratio of 1.8.

### (Production Example 2): Preparing silicon dioxide-tin dioxide composite metal oxide particle (b1) as shell

First, 77.2 g of JIS No. 3 sodium silicate (containing 29.8 mass% in terms of SiO₂) was dissolved in 668.8 g of pure water, and 20.9 g of sodium stannate NaSnO₃·H₂O (containing 55.1 mass% in terms of SnO₂) was dissolved therein. The resulting aqueous solution was passed through a column packed with a hydrogen-type cation exchange resin (AMBERLITE (trade name) IR-120B). Subsequently, 7.2 g of diisopropylamine was added to the resulting water-dispersed sol. The obtained solution was an alkaline water dispersion containing silicon dioxide-tin dioxide composite metal oxide (b1), and had a pH of 8.0, a total metal oxide concentration (SnO₂ and SnO₂) of 2.7 mass%.

### (Production Example 3): Preparing silicon dioxide (b2) as shell

First, 77.2 g of JIS No. 3 sodium silicate (containing 29.8 mass% in terms of SiO₂) was dissolved in 689.7 g of pure water. The resulting aqueous solution was passed through a column packed with a hydrogen-type cation exchange resin (AMBERLITE (trade name) IR-120B). Subsequently, 4.6 g of diisopropylamine was added to the resulting water-dispersed sol. The resultant was an alkaline water dispersion containing silicon dioxide (b1), and had a pH of 8.3 and a total metal oxide concentration (silicon dioxide concentration) of 2.7 mass%.

### (Example 1)

To 276.5 g of the water dispersion containing titanium oxide-tin dioxide composite metal oxide particles (a1) obtained in Production Example 1 were added, under stirring, 261.7 g of 35 mass% aqueous tetraethylammonium hydroxide solution, 255 g of titanium tetraisopropoxide (containing 71.6 g in terms of TiO₂), and 58.8 g of oxalic acid dihydrate. The mixed solution was kept at 80°C for 2 hours and then kept at 95°C for 5 hours while pure water was added to keep the liquid level constant. The above mixed solution was placed in a glass-lined autoclave vessel, and hydrothermally treated at 140°C for 5 hours to grow particles. The resulting sol was desalted and washed by ultrafiltration, and 2.4 g of 35% tetraethylammonium hydroxide was added. The mixture was passed through a column packed with 500 ml of an ion exchange resin (AMBERLITE (trade name) IRA-410, manufactured by ORGANO CORPORATION) to prepare a sol. The obtained sol was a water dispersion containing titanium oxide-tin dioxide composite metal oxide particles (a2) coated with titanium oxide, and had a pH of 12.1, a total metal oxide concentration (TiO₂ and SnO₂, etc.) of 3.5 mass%, and an average primary particle diameter of 12 nm as observed by transmission electron microscopy. The powder obtained by drying this sol at 110°C was subjected to measurement using X-ray diffractometry and was found to be a rutile-type crystal.

Here, 35.1 g of zirconium oxychloride (containing 7.0 g in terms of ZrO₂) was diluted with 475 g of pure water to prepare 510.1 g of aqueous zirconium oxychloride solution. Subsequently, 1576.5 g of a water dispersion containing the titanium oxide-tin dioxide composite metal oxide particle (a2) coated with titanium oxide was added under stirring. Next, the mixture was hydrolyzed by heating at 95°C for 5 hours to obtain a water dispersion containing titanium oxide-tin dioxide-zirconium oxide composite metal oxide particles with an additional thin layer of zirconium oxide formed on the surface coated with titanium oxide. Then, 2073.0 g of the resulting water dispersion was added under stirring to 565.3 g of the alkaline water dispersion containing silicon dioxide-tin dioxide composite metal oxide (b1) prepared in Production Example 2. The mixture was passed through a column packed with 500 ml of an anion exchange resin (AMBERLITE (trade name) IRA-410, manufactured by ORGANO CORPORATION). Next, the passed-through water dispersion was heated at 150°C for 4 hours and passed through a column packed with a cation exchange resin (AMBERLITE (trade name) IR-120B, manufactured by ORGANO CORPORATION). Then, 3.1 g of tri-n-pentylamine was added to the resulting water dispersion, and the mixture was concentrated by ultrafiltration to produce a water dispersion containing titanium oxide-tin dioxide-zirconium oxide composite metal oxide particles (c1) coated with a silicon dioxide-tin dioxide composite metal oxide. The dispersant of the resulting water dispersion was replaced by methanol in a rotary evaporator to obtain a methanol dispersion containing the core-shell type metal oxide particles. The methanol dispersion had a pH of 5.2, a total metal oxide (TiO₂, ZrO₂, SnO₂, and SiO₂, etc.) concentration of 30.0 mass%, and a viscosity of 5.0 mPa·s. In addition, the mass ratio of TiO₂ in the particle was 70%, the average primary particle diameter by transmission electron microscopy was 15 nm, the aspect ratio was 1.8, the standard deviation σ was 2 nm, the refractive index was 2.2, and the light resistance of the dispersion was rated ○.

### (Example 2)

To 471 g of the water dispersion containing titanium oxide-tin dioxide composite metal oxide particles (a1) obtained in Production Example 1 were added, under stirring, 203.5 g of 35 mass% aqueous tetraethylammonium hydroxide solution, 198.4 g of titanium tetraisopropoxide (containing 55.8 g in terms of TiO₂), and 45.8 g of oxalic acid dihydrate. The mixed solution was kept at 80°C for 2 hours and then kept at 95°C for 5 hours while pure water was added to keep the liquid level constant. The above mixed solution was placed in a glass-lined autoclave vessel, and hydrothermally treated at 140°C for 5 hours to grow particles. The resulting sol was desalted and washed by ultrafiltration, and 2.5 g of 35% tetraethylammonium hydroxide was added. The mixture was passed through a column packed with 500 ml of an ion exchange resin (AMBERLITE (trade name) IRA-410, manufactured by ORGANO CORPORATION) to prepare a sol. The obtained sol was a water dispersion containing titanium oxide-tin dioxide composite metal oxide particles coated with titanium oxide, and had a pH of 12.0, a total metal oxide concentration (TiO₂ and SnO₂, etc.) of 5.0 mass%, and an average primary particle diameter of 10.5 nm as observed by transmission electron microscopy. The powder obtained by drying this sol at 110°C was subjected to measurement using X-ray diffractometry and was found to be a rutile-type crystal.

Here, 36.9 g of zirconium oxychloride (containing 7.4 g in terms of ZrO₂) was diluted with 876.4 g of pure water to prepare 913.3 g of aqueous zirconium oxychloride solution. Subsequently, 1000 g of a water dispersion containing the titanium oxide-tin dioxide composite metal oxide particle coated with titanium oxide was added under stirring. Next, the mixture was hydrolyzed by heating at 95°C for 5 hours to obtain a water dispersion containing titanium oxide-tin dioxide-zirconium oxide composite metal oxide particles with an additional thin layer of zirconium oxide formed on the surface coated with titanium oxide. Then, 1913 g of the resulting water dispersion was added under stirring to 619.5 g of the alkaline water dispersion containing the silicon dioxide-tin dioxide composite metal oxide (b1) prepared in Production Example 2. The mixture was passed through a column packed with 500 ml of an anion exchange resin (AMBERLITE (trade name) IRA-410, manufactured by ORGANO CORPORATION). Next, the passed-through water dispersion was heated at 150°C for 4 hours and passed through a column packed with a cation exchange resin (AMBERLITE (trade name) IR-120B, manufactured by ORGANO CORPORATION). Then, 1.7 g of tri-n-pentylamine was added to the resulting water dispersion, and the mixture was concentrated by ultrafiltration to produce a water dispersion containing titanium oxide-tin dioxide-zirconium oxide composite metal oxide particles (c2) coated with a silicon dioxide-tin dioxide composite metal oxide. The dispersant of the resulting water dispersion was replaced by methanol in a rotary evaporator to obtain a methanol dispersion containing the core-shell type metal oxide particles. The methanol dispersion had a pH of 5.0, a total metal oxide (TiO₂, ZrO₂, SnO₂, and SiO₂, etc.) concentration of 30.1 mass%, and a viscosity of 5.0 mPa·s. In addition, the mass ratio of TiO₂ in the particle was 65 mass%, the average primary particle diameter by transmission electron microscopy was 13 nm, the aspect ratio was 1.8, the standard deviation σ was 2 nm, the refractive index was 2.12, and the light resistance of the dispersion was rated ○.

### (Example 3)

First, 1968.5 g of a water dispersion containing the titanium oxide-tin dioxide-zirconium oxide composite metal oxide particles, the surface of which was coated with titanium oxide and further having a zirconium oxide thin film layer formed, as prepared in Example 1, was added under stirring to 648.1 g of the alkaline water dispersion containing the silicon dioxide (b2) prepared in Production Example 3. The mixture was passed through a column packed with 500 ml of an anion exchange resin (AMBERLITE (trade name) IRA-410, manufactured by ORGANO CORPORATION). Next, the passed-through water dispersion was heated at 150°C for 4 hours and passed through a column packed with a cation exchange resin (AMBERLITE (trade name) IR-120B, manufactured by ORGANO CORPORATION). Then, 2.7 g of tri-n-pentylamine was added to the resulting water dispersion, and the mixture was concentrated by ultrafiltration to a total metal oxide concentration of 20 mass% to produce a water dispersion containing titanium oxide-tin dioxide-zirconium oxide composite metal oxide particles (c4) coated with silicon dioxide. Next, 338 g of methanol and 6.7 g of 3-methacryloxypropyltrimethoxysilane (trade name: KBM-503, manufactured by Shin-Etsu Chemical Co., Ltd.) were added, and the mixture was heated at 60°C for 5 hours. In this way, the surface of the particle was modified. The dispersant of the resulting water dispersion was replaced by methanol in a rotary evaporator to obtain a methanol dispersion containing the core-shell type metal oxide particles. The methanol dispersion had a pH of 4.8, a total metal oxide (TiO₂, ZrO₂, SnO₂, and SiO₂, etc.) concentration of 30.0 mass%, and a viscosity of 5.1 mPa·s. In addition, the mass ratio of TiO₂ in the particle was 64 mass%, the average primary particle diameter by transmission electron microscopy was 14 nm, the aspect ratio was 1.8, the standard deviation σ was 2 nm, the refractive index was 2.10, and the light resistance of the dispersion was rated ○.

### (Example 4)

To 1428.5 g of a water dispersion containing titanium oxide-tin dioxide composite metal oxide particles (a2) coated with titanium oxide as obtained in Production Example 1 were added, under stirring, 1428.5 g of methanol and 41.1 g of ethyl orthosilicate (containing 29.8 mass% in terms of SiO₂). This was heated and stirred at 50°C for 24 hours to afford a water dispersion containing titanium oxide-tin dioxide composite metal oxide particles (c4) coated with silicon dioxide. The resulting water dispersion was concentrated in a rotary evaporator to a total metal oxide concentration of 20 mass%. Next, 311 g of methanol and 6.2 g of 3-methacryloxypropyltrimethoxysilane were added, and the mixture was heated at 60°C for 5 hours. In this way, the surface of the particle was modified. The dispersant was then replaced by methanol in a rotary evaporator to obtain a methanol dispersion containing core-shell type metal oxide particles. The methanol dispersion had a pH of 8.8, a total metal oxide (TiO₂, SnO₂, and SiO₂) concentration of 29.5 mass%, and a viscosity of 5.3 mPa·s. In addition, the mass ratio of TiO₂ in the particle was 79 mass%, the average primary particle diameter by transmission electron microscopy was 13 nm, the aspect ratio was 1.8, the standard deviation σ was 2 nm, the refractive index was 2.19, and the light resistance of the dispersion was rated ○.

### (Example 5)

To 100.0 g of the (c1) methanol dispersion obtained in Example 1 was added 3.0 g of 3-methacryloxypropyltrimethoxysilane, and the mixture was heated at 60°C for 5 hours. In this way, the surface of the particle was modified. The resulting methanol dispersion had a pH of 5.4, a total metal oxide (TiO₂, ZrO₂, SnO₂, and SiO₂, etc.) concentration of 30.2 mass%, and a viscosity of 5.1 mPa·s. In addition, the mass ratio of TiO₂ in the particle was 70 mass%, the average primary particle diameter by transmission electron microscopy was 15 nm, the aspect ratio was 1.8, the standard deviation σ was 2 nm, the refractive index was 2.2, and the light resistance of the dispersion was rated ○.

### (Example 6)

To 100.0 g of the (c1) methanol dispersion obtained in Example 1 was added 3.0 g of phenyltrimethoxysilane (trade name: KBM-103, manufactured by Shin-Etsu Chemical Co., Ltd.), and the mixture was heated at 60°C for 5 hours. In this way, the surface of the particle was modified. The resulting methanol dispersion had a pH of 5.4, a total metal oxide (TiO₂, ZrO₂, SnO₂, and SiO₂, etc.) concentration of 30.1 mass%, and a viscosity of 5.0 mPa·s. In addition, the mass ratio of TiO₂ in the particle was 70 mass%, the average primary particle diameter by transmission electron microscopy was 15 nm, the aspect ratio was 1.8, the standard deviation σ was 2 nm, the refractive index was 2.2, and the light resistance of the dispersion was rated ○.

### (Example 7)

To 100.0 g of the (c1) methanol dispersion obtained in Example 1 was added 3.0 g of 2-(allyloxymethyl) (trimethoxysilyl)propyl acrylate (trade name: X-12-1333A, manufactured by Shin-Etsu Chemical Co., Ltd.), and the mixture was heated at 60°C for 5 hours. In this way, the surface of the particle was modified. The resulting methanol dispersion had a pH of 5.4, a total metal oxide (TiO₂, ZrO₂, SnO₂, and SiO₂, etc.) concentration of 30.2 mass%, and a viscosity of 5.1 mPa·s. In addition, the mass ratio of TiO₂ in the particle was 70 mass%, the average primary particle diameter by transmission electron microscopy was 15 nm, the aspect ratio was 1.8, the standard deviation σ was 2 nm, the refractive index was 2.2, and the light resistance of the dispersion was rated ○.

### (Comparative Example 1)

First, 797.9 g of the water dispersion containing the titanium oxide-tin dioxide composite metal oxide particles (a1) obtained in Production Example 1 was placed in a glass-lined autoclave vessel and hydrothermally treated at 140°C for 5 hours. The resulting sol was desalted and washed by ultrafiltration, and 1.9 g of 35% tetraethylammonium hydroxide was added. The mixture was passed through a column packed with 500 ml of an ion exchange resin (AMBERLITE (trade name) IRA-410, manufactured by ORGANO CORPORATION) to prepare a sol. The obtained sol was a water dispersion containing titanium oxide-tin dioxide composite metal oxide particles without titanium oxide coating, and had a pH of 11.9, a total metal oxide concentration (TiO₂ and SnO₂, etc.) of 5.0 mass%, and an average primary particle diameter of 8 nm as observed by transmission electron microscopy. The powder obtained by drying this sol at 110°C was subjected to measurement using X-ray diffractometry and was found to be a rutile-type crystal.

Here, 75.1 g of zirconium oxychloride (containing 15 g in terms of ZrO₂) was diluted with 1425.0 g of pure water to prepare 1500.0 g of aqueous zirconium oxychloride solution. Subsequently, 1499.7 g of a water dispersion containing the titanium oxide-tin dioxide composite metal oxide particles was added under stirring. Next, the mixture was hydrolyzed by heating at 95°C for 5 hours to obtain a water dispersion containing titanium oxide-tin dioxide-zirconium oxide composite metal oxide particles having a zirconium oxide thin film layer formed. Subsequently, 2978.4 g of the resulting water dispersion was added under stirring to 1333.2 g of the alkaline water dispersion containing the silicon dioxide-tin dioxide composite metal oxide (b1) prepared in Production Example 2. The mixture was passed through a column packed with 500 ml of an anion exchange resin (AMBERLITE (trade name) IRA-410, manufactured by ORGANO CORPORATION). Next, the passed-through water dispersion was heated at 150°C for 4 hours and passed through a column packed with a cation exchange resin (AMBERLITE (trade name) IR-120B, manufactured by ORGANO CORPORATION). Then, 5.4 g of tri-n-pentylamine was added to the resulting water dispersion, and the mixture was concentrated by ultrafiltration to produce a water dispersion containing titanium oxide-tin dioxide-zirconium oxide composite metal oxide particles (c6) coated with a silicon dioxide-tin dioxide composite metal oxide. The dispersant of the resulting water dispersion was replaced by methanol in a rotary evaporator to obtain a methanol dispersion containing the core-shell type metal oxide particles. The methanol dispersion had a pH of 5.5, a total metal oxide (TiO₂, ZrO₂, SnO₂, and SiO₂, etc.) concentration of 30.5 mass%, and a viscosity of 4.8 mPa·s. In addition, the mass ratio of TiO₂ in the particle was 55 mass%, the average primary particle diameter by transmission electron microscopy was 11 nm, the aspect ratio was 1.8, the standard deviation σ was 2 nm, the refractive index was 2.04, and the light resistance of the dispersion was rated ○.

### (Comparative Example 2)

The sol was prepared in the same manner as in Example 1, except that the amount of aqueous tetraethylammonium hydroxide solution was changed to 221.8 g. The obtained sol had a pH of 5.3, a total metal oxide concentration (TiO₂ and SnO₂, etc.) of 10.2 mass%, an average particle diameter of 16 nm by dynamic light scattering, and a primary particle aspect ratio, as observed by transmission electron microscopy, of 3.0, resulting in irregular-shaped particles that grew only in the long axis direction. Here, 735.3 g of this sol was placed in a glass-lined autoclave vessel, and hydrothermally treated at 140°C for 5 hours. The resulting sol was desalted and washed by ultrafiltration, and 1.9 g of 35% tetraethylammonium hydroxide was added. The mixture was passed through a column packed with 500 ml of an ion exchange resin (AMBERLITE (trade name) IRA-410, manufactured by ORGANO CORPORATION) to prepare a sol. The obtained sol was a water dispersion containing irregular-shaped titanium oxide-tin dioxide composite metal oxide particles without titanium oxide coating, and had a pH of 12.2, a total metal oxide concentration (TiO₂ and SnO₂, etc.) of 4.8 mass%, and an average primary particle diameter of 12 nm as observed by transmission electron microscopy. The powder obtained by drying this sol at 110°C was subjected to measurement using X-ray diffractometry and was found to be a rutile-type crystal.

Here, 75.1 g of zirconium oxychloride (containing 15 g in terms of ZrO₂) was diluted with 1425.0 g of pure water to prepare 1500.0 g of aqueous zirconium oxychloride solution. Subsequently, 1562.5 g of a water dispersion containing the titanium oxide-tin dioxide composite metal oxide particles was added under stirring. Next, the mixture was hydrolyzed by heating at 95°C for 5 hours to obtain a water dispersion containing titanium oxide-tin dioxide-zirconium oxide composite metal oxide particles having a zirconium oxide thin film layer formed. Subsequently, 3058.6 g of the resulting water dispersion was added under stirring to 250.0 g of the alkaline water dispersion containing silicon dioxide-tin dioxide composite metal oxide (b1) prepared in Production Example 2. The mixture was passed through a column packed with 500 ml of an anion exchange resin (AMBERLITE (trade name) IRA-410, manufactured by ORGANO CORPORATION). Next, the passed-through water dispersion was heated at 150°C for 4 hours and passed through a column packed with a cation exchange resin (AMBERLITE (trade name) IR-120B, manufactured by ORGANO CORPORATION). Then, 2.6 g of tri-n-pentylamine was added to the resulting water dispersion, and the mixture was concentrated by ultrafiltration to produce a water dispersion containing titanium oxide-tin dioxide-zirconium oxide composite metal oxide particles (c7) coated with a silicon dioxide-tin dioxide composite metal oxide. The dispersant of the resulting water dispersion was replaced by methanol in a rotary evaporator to obtain a methanol dispersion containing the core-shell type metal oxide particles. The methanol dispersion had a pH of 5.8, a total metal oxide (TiO₂, ZrO₂, SnO₂, and SiO₂, etc.) concentration of 30.7 mass%, and a viscosity of 6.5 mPa·s. In addition, the mass ratio of TiO₂ in the particle was 70 mass%, the average primary particle diameter by transmission electron microscopy was 15 nm, the aspect ratio was 3.0, the standard deviation σ was 3 nm, the refractive index was 2.2, and the light resistance of the dispersion was rated ○.

### (Comparison Example 3)

To 184.4 g of the alkaline water dispersion containing the silicon dioxide-tin dioxide composite metal oxide (b1) prepared in Production Example 2 was added, under stirring, 1500.0 g of a water dispersion containing the titanium oxide-tin dioxide composite metal oxide particles (a2) coated with titanium oxide as obtained in Example 1. Next, the mixture was heated at 95°C for 3 hours and passed through a column packed with a cation exchange resin (AMBERLITE (trade name) IR-120B, manufactured by ORGANO CORPORATION). Then, 1.6 g of tri-n-pentylamine was added to the resulting water dispersion, and the mixture was concentrated by ultrafiltration to produce a water dispersion containing titanium oxide-tin dioxide composite metal oxide particles (c8) coated with a silicon dioxide-tin dioxide composite metal oxide. The dispersant of the resulting water dispersion was replaced by methanol in a rotary evaporator to obtain a methanol dispersion containing the core-shell type metal oxide particles. The methanol dispersion had a pH of 5.2, a total metal oxide (TiO₂, SnO₂, and SiO₂, etc.) concentration of 30.4 mass%, and a viscosity of 4.5 mPa·s. In addition, the mass ratio of TiO₂ in the particle was 89 mass%, the average primary particle diameter by transmission electron microscopy was 13 nm, the aspect ratio was 1.8, the standard deviation σ was 2 nm, and the refractive index was 2.3. The light resistance of the dispersion was rated × due to insufficient coating of metal oxides other than titanium oxide.

### (Comparison Example 4)

Here, 0.2 g of tri-n-pentylamine was added to 200.0 g of the water dispersion containing the titanium oxide-tin dioxide composite metal oxide particles (a2) coated with titanium oxide as obtained in Example 1, and the mixture was concentrated by ultrafiltration. Next, the dispersant of this water dispersion was replaced by methanol in a rotary evaporator to obtain a methanol dispersion containing the metal oxide particles. The methanol dispersion had a pH of 11.7, a total metal oxide (TiO₂, and SnO₂, etc.) concentration of 25.1 mass%, and a viscosity of 6.3 mPa·s. In addition, the mass ratio of TiO₂ in the particle was 98 mass%, the average primary particle diameter by transmission electron microscopy was 12 nm, the aspect ratio was 1.8, the standard deviation σ was 2 nm, and the refractive index was 2.4. The light resistance of the dispersion was rated × due to no coating of metal oxides other than titanium oxide.

### (Example 8)

The dispersant of the methanol dispersion containing the particles (c1) obtained in Example 1 was replaced by PGME in a rotary evaporator to obtain a PGME dispersion containing the particles (c1). The PGME dispersion had a total metal oxide (TiO₂, ZrO₂, SnO₂, and SiO₂, etc.) concentration of 20.5 mass% and an average particle diameter (dynamic light scattering particle diameter) of 28 nm by dynamic light scattering (DLS).

### (Film evaluation)

The resulting PGME dispersion was used to prepare a cured film according to the following procedure.

To a brown bottle equipped with a magnetic stirrer were added 0.75 g of a mixture of dipentaerythritol hexa- and penta-acrylate (trade name: KAYARAD DPHA, manufactured by Nippon Kayaku Co., Ltd.) as a resin binder and 1.8 g of PGME. Then, 10.98 g of the PGME dispersion containing the particles (c1) (the amount of particles added: 300 phr) was added while stirring. Next, 0.0075 g of photo-radical polymerization initiator (trade name: Irgacure OXE01, manufactured by BASF) and 0.10 g of PGME solution containing polyether-modified silicone surface modifier (trade name: DOWSIL (trade mark) L-7001, manufactured by Dow Corning Toray) (the L-7001 concentration: 10.0 mass%) were added and stirred for 0.5 hours to prepare a varnish. A glass substrate was provided and coated with the varnish by spin-coating. After the solvent was volatilized at 100°C for 2 minutes, the material was UV-cured using a high-pressure mercury lamp at an integrated light intensity of 1000 mJ/cm² to form a cured film. The obtained cured film had a thickness of 1.0 µm, a refractive index of 1.85, and a haze of 0.18%, and the light resistance was "○". The imprintability was also evaluated using the same varnish and rated as " ○".

### (Example 9)

The methanol dispersion containing the particles (c2) as obtained in Example 2 and the same procedure as in Example 8 were used to produce a PGME dispersion containing the particles (c2). The PGME dispersion had a total metal oxide (TiO₂, ZrO₂, SnO₂, and SiO₂) concentration of 20.5 mass% and an average particle diameter (dynamic light scattering particle diameter) of 23 nm by dynamic light scattering (DLS).

In the film evaluation, a cured film was prepared in the same manner as in Example 8, except that this PGME dispersion was used. The obtained cured film had a thickness of 1.0 µm, a refractive index of 1.82, and a haze of 0.15%, and the light resistance was " ○". The imprintability was also evaluated using the same varnish and rated as "○".

### (Example 10)

A PGME dispersion containing the particles (c3) was produced using the same procedure as in Example 8, except that instead of the methanol dispersion containing the particles (c1) as obtained in Example 1, the methanol dispersion containing the particles (c3), the surface of which was modified with 3-methacryloxypropyltrimethoxysilane, as obtained in Example 3 was used. The PGME dispersion had a total metal oxide (TiO₂, ZrO₂, SnO₂, and SiO₂) concentration of 20.5 mass% and an average particle diameter (dynamic light scattering particle diameter) of 20 nm by dynamic light scattering (DLS).

In the film evaluation, a cured film was prepared in the same manner as in Example 8, except that this PGME dispersion was used. The obtained cured film had a thickness of 1.0 µm, a refractive index of 1.81, and a haze of 0.16%, and the light resistance was "○". The imprintability was also evaluated using the same varnish and rated as "○".

### (Example 11)

A PGME dispersion containing the particles (c4) was produced using the same procedure as in Example 8, except that instead of the methanol dispersion containing the particles (c1) as obtained in Example 1, the methanol dispersion containing the particles (c4), the surface of which was modified with 3-methacryloxypropyltrimethoxysilane, as obtained in Example 4 was used. The PGME dispersion had a total metal oxide (TiO₂, ZrO₂, SnO₂, and SiO₂) concentration of 20.5 mass% and an average particle diameter (dynamic light scattering particle diameter) of 24 nm by dynamic light scattering (DLS).

In the film evaluation, a cured film was prepared in the same manner as in Example 8, except that this PGME dispersion was used. The obtained cured film had a thickness of 1.0 µm, a refractive index of 1.85, and a haze of 0.14%, and the light resistance was " ○". The imprintability was also evaluated using the same varnish and rated as "○".

### (Example 12)

A PGME dispersion containing the particles (c1) was produced using the same procedure as in Example 8, except that instead of the methanol dispersion containing the particles (c1) as obtained in Example 1, the methanol dispersion containing the particles (c1), the surface of which was modified with 3-methacryloxypropyltrimethoxysilane, as obtained in Example 5 was used. The PGME dispersion had a total metal oxide (TiO₂, ZrO₂, SnO₂, and SiO₂) concentration of 20.5 mass% and an average particle diameter (dynamic light scattering particle diameter) of 18 nm by dynamic light scattering (DLS).

In the film evaluation, a cured film was prepared in the same manner as in Example 8, except that this PGME dispersion was used. The obtained cured film had a thickness of 1.0 µm, a refractive index of 1.82, and a haze of 0.15%, and the light resistance was " ○". The imprintability was also evaluated using the same varnish and rated as "○".

### (Example 13)

A PGME dispersion containing the particles (c1) was produced using the same procedure as in Example 8, except that instead of the methanol dispersion containing the particles (c1) as obtained in Example 1, the methanol dispersion containing the particles (c1), the surface of which was modified with phenyltrimethoxysilane, as obtained in Example 6 was used. The PGME dispersion had a total metal oxide (TiO₂, ZrO₂, SnO₂, and SiO₂) concentration of 20.5 mass% and an average particle diameter (dynamic light scattering particle diameter) of 17 nm by dynamic light scattering (DLS).

In the film evaluation, a cured film was prepared in the same manner as in Example 8, except that this PGME dispersion was used. The obtained cured film had a thickness of 1.0 µm, a refractive index of 1.83, and a haze of 0.21%, and the light resistance was "○". The imprintability was also evaluated using the same varnish and rated as "○".

### (Example 14)

A PGME dispersion containing the particles (c1) was produced using the same procedure as in Example 8, except that instead of the methanol dispersion containing the particles (c1) as obtained in Example 1, the methanol dispersion containing the particles (c1), the surface of which was modified with 2-(allyloxymethyl) (trimethoxysilyl)propyl acrylate, as obtained in Example 7 was used. The PGME dispersion had a total metal oxide (TiO₂, ZrO₂, SnO₂, and SiO₂) concentration of 20.5 mass% and an average particle diameter (dynamic light scattering particle diameter) of 15 nm by dynamic light scattering (DLS).

In the film evaluation, a cured film was prepared in the same manner as in Example 8, except that this PGME dispersion was used. The obtained cured film had a thickness of 1.0 µm, a refractive index of 1.82, and a haze of 0.10%, and the light resistance was " ○". The imprintability was also evaluated using the same varnish and rated as "○".

### (Comparison Example 5)

A PGME dispersion containing the particles (c6) was produced using the same procedure as in Example 8, except that instead of the methanol dispersion containing the particles (c1) as obtained in Example 1, the methanol dispersion containing the particles (c6) as obtained in Comparative Example 1 was used. The PGME dispersion had a total metal oxide (TiO₂, ZrO₂, SnO₂, and SiO₂) concentration of 20.5 mass% and an average particle diameter (dynamic light scattering particle diameter) of 17 nm by dynamic light scattering (DLS).

In the film evaluation, a cured film was prepared in the same manner as in Example 8, except that this PGME dispersion was used. The obtained cured film had a thickness of 1.1 µm, a refractive index of 1.79, and a haze of 0.14%, and the light resistance was " ○". The imprintability was also evaluated using the same varnish and rated as "○".

### (Comparison Example 6)

A PGME dispersion containing the particles (c7) was produced using the same procedure as in Example 8, except that instead of the methanol dispersion containing the particles (c1) as obtained in Example 1, the methanol dispersion containing the particles (c7) as obtained in Comparative Example 2 was used. The PGME dispersion had a total metal oxide (TiO₂, ZrO₂, SnO₂, and SiO₂) concentration of 20.5 mass% and an average particle diameter (dynamic light scattering particle diameter) of 43 nm by dynamic light scattering (DLS).

In the film evaluation, a cured film was prepared in the same manner as in Example 8, except that this PGME dispersion was used. The obtained cured film had a high haze of 0.8%, and no transparent film was obtained. Therefore, the thickness and refractive index were unable to be calculated by optical simulation based on reflectivity.

The core-shell type metal oxide particles obtained in Examples 1 to 7 have an average primary particle diameter of 13 to 15 nm, a standard deviation σ of 2 nm, an aspect ratio of 1.8, and a refractive index of 2.10 to 2.29, and the light resistance of the dispersion was ○. The cured films of Examples 8 to 14 had a refractive index of 1.81 to 1.86 and a haze of 0.10 to 0.25, and their light refractive index was "○" and their imprintability was "○". Thus, the refractive index, transparency, and light resistance were excellent.

The core-shell type metal oxide particle obtained in Comparative Example 1 had a refractive index of 2.04, and the cured film in Comparative Example 5 had a refractive index of 1.79. Therefore, it cannot be said that the refractive index is sufficient. The core-shell type metal oxide particle obtained in Comparative Example 2 had an aspect ratio of 3.0, and the cured film in Comparative Example 6 had a haze of 0.8%. Therefore, it cannot be said that the transparency is sufficient. In the core-shell type metal oxide particles obtained in Comparative Examples 3 and 4, the light resistance of the dispersion was ×. Therefore, it cannot be said that the light resistance is sufficient.

From the above results, in the core-shell type metal oxide particle of the present invention, the surface of the core metal oxide particle is coated with titanium oxide and the coating is further coated with a metal oxide containing, as a main component, a metal oxide(s) other than titanium oxide. By doing so, it is possible to adjust the primary particle diameter while maintaining the aspect ratio, and it has excellent light resistance, transparency, and processability such as imprinting, as well as a high refractive index. Besides, it has been found that the composition blended with the particles has excellent optical properties.

### Industrial Applicability

The core-shell type metal oxide particle of the present invention is suitable for optical thin films such as hard coatings, UV-cut layers, anti-reflective films, and diffractive optical elements by compositing with a thermosetting or photocurable resin.

## Claims

1. A core-shell type metal oxide particle (C) having an average primary particle diameter of 10 to 20 nm, wherein when the metal oxide particle is observed under a transmission electron microscope, a standard deviation σ of an equivalent circular diameter of the particle is less than 3 nm.

2. The core-shell type metal oxide particle (C) according to claim 1, wherein a surface of a core metal oxide particle (A1) is coated with a titanium oxide-containing metal oxide (A2), and the resulting coating is further coated with a metal oxide (A3) containing, as a main component, a metal oxide other than titanium oxide, and wherein the metal oxide particle (A1) is rutile-type titanium oxide containing at least one selected from the group consisting of tin oxide, zirconium oxide, zinc oxide, iron oxide, nickel oxide, and aluminum oxide.

3. The core-shell type metal oxide particle (C) according to claim 2, wherein the metal oxide (A3) includes at least one metal oxide selected from the group consisting of zirconium oxide, tin oxide, silicon dioxide, zinc oxide, antimony oxide, niobium oxide, tungsten oxide, aluminum oxide, and tantalum oxide, or a composite of two or more metal oxides.

4. The core-shell type metal oxide particle (C) according to claim 2, wherein the metal oxide (A3) is a tin oxide-silicon dioxide composite metal oxide.

5. The core-shell type metal oxide particle (C) according to any one of claims 1 to 4, wherein the core-shell metal oxide particle (C) has a refractive index of 2.1 to 2.7.

6. The core-shell type metal oxide particle (C) according to any one of claims 1 to 4, comprising 60 to 85 mass% of titanium oxide in terms of TiO₂.

7. The core-shell type metal oxide particle (C) according to any one of claims 1 to 4, wherein the core-shell metal oxide particle (C) is further coated with a shell (B).

8. The core-shell type metal oxide particle (C) according to claim 7, wherein the shell (B) is at least one selected from the group consisting of an amine (B1), a silane compound (B2), an organic acid, an organic acid ester (B3), a phosphate (B4), and a surfactant (B5).

9. The core-shell type metal oxide particle (C) according to claim 8, wherein the amine (B1) is a C₅₋₃₅ secondary amine and/or tertiary amine.

10. The core-shell type metal oxide particle (C) according to claim 8, wherein the silane compound (B2) is a hydrolysis product and/or a dehydration condensation product of at least one silane compound selected from the group consisting of formulas (1) to (3): 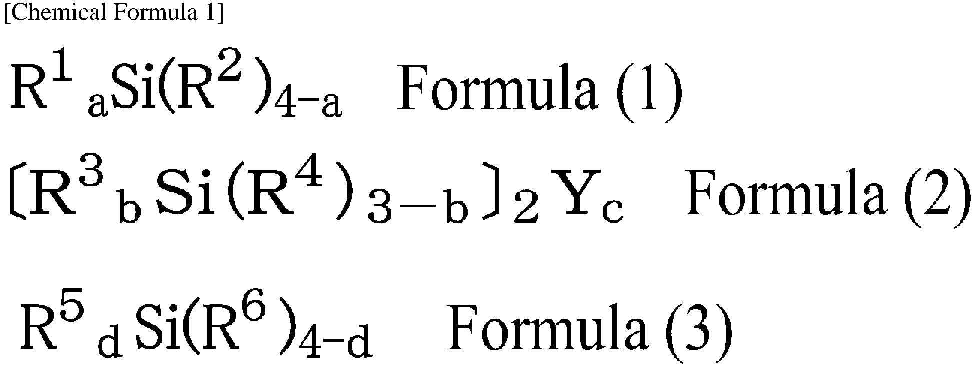
wherein in formula (1), R¹ moieties are each an alkyl group, a halogenated alkyl group, an alkenyl group, an aryl group, or an organic group having a polyether group, an epoxy group, a (meth)acryloyl group, a mercapto group, an amino group, a ureido group, or a cyano group, and bonded to a silicon atom via a Si-C bond, R² moieties each represent an alkoxy group, an acyloxy group, or a halogen group, and a represents an integer from 1 to 3; and
in formulas (2) and (3), R³ and R⁵ moieties are each a C₁₋₃ alkyl group or a C₆₋₃₀ aryl group, and bonded to a silicon atom via a Si-C bond, R⁴ and R⁶ moieties are each an alkoxy group, an acyloxy group, or a halogen group, Y is an alkylene group, an NH group, or an oxygen atom, b is an integer from 1 to 3, c is an integer 0 or 1, and d is an integer from 1 to 3.

11. The core-shell type metal oxide particle (C) according to claim 8, wherein the organic acid or organic acid ester (B3) is acetic acid, benzoic acid, oxalic acid, malonic acid, succinic acid, glycolic acid, lactic acid, malic acid, tartaric acid, citric acid, or an alkyl, aryl, or arylalkyl ester thereof.

12. The core-shell type metal oxide particle (C) according to claim 8, wherein the phosphate (B4) is at least one phosphate selected from the group consisting of formulas (4) to (6): 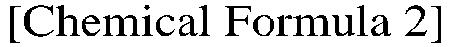 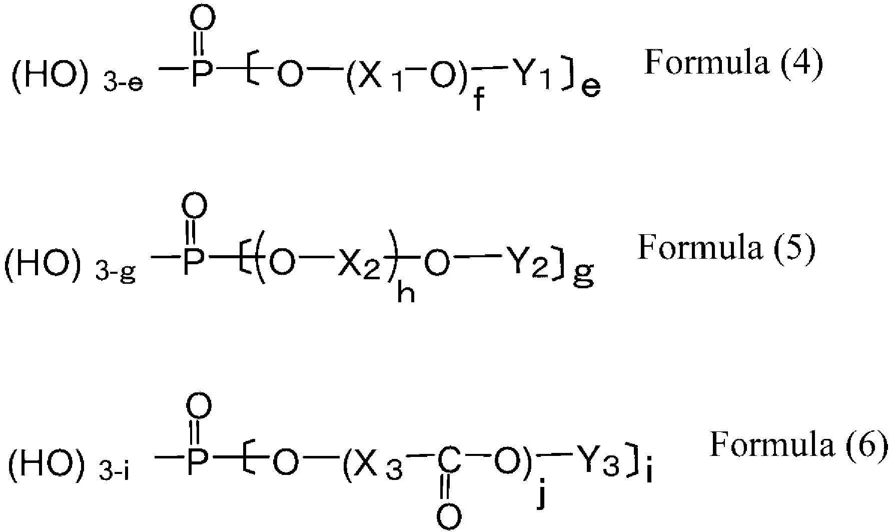 wherein in formulas (4) to (6), X₁, X₂, and X₃ each represent a C₂₋₂₀ alkylene group, f, h, and j each represent an integer from 1 to 100, e, g, and i each represent an integer from 1 to 3, and Y₁, Y₂, and Y₃ each represent a hydrogen atom, a C₁₋₂₀ alkyl group, a C₂₋₂₀ alkenyl group, a C₆₋₃₀ aryl group, or a (meth)acrylic group.

13. The core-shell type metal oxide particle (C) according to claim 8, wherein the surfactant (B5) is an anionic surfactant, a cationic surfactant, a nonionic surfactant, or an amphoteric surfactant.

14. A core-shell type metal oxide sol comprising the core-shell type metal oxide particle (C) according to claim 1 and a dispersant.

15. The core-shell metal oxide sol according to claim 14, wherein the dispersant is a dispersant consisting of water, alcohol, ether, ester, ketone, amide, hydrocarbon, or a combination thereof.

16. A varnish comprising the core-shell type metal oxide particle (C) according to any one of claims 1 to 4 or the core-shell type metal oxide sol according to claim 14 or 15, and a thermosetting and/or photocurable resin.

17. The varnish according to claim 16, wherein the varnish is a varnish for improving light resistance.

18. The varnish according to claim 16, wherein the varnish is a varnish for hard coating.

19. The varnish according to claim 16, wherein the varnish is a varnish for nanoimprinting.

20. A method for producing the core-shell type metal oxide sol according to claim 14 or 15, the method comprising the steps (i), (ii), and (iii):
step (i): step (i) of adding a precursor material of titanium oxide-containing metal oxide (A2) to a metal oxide sol comprising a core metal oxide particle (A1) using water as a dispersant;
step (ii): step (ii) of heating the sol comprising the core metal oxide particle (A1) and the precursor material of titanium oxide (A2) to coat a surface of the core metal oxide particle (A1) with the titanium oxide-containing metal oxide (A2); and
step (iii): step (iii) of adding, to the sol obtained in step (ii), a sol comprising a metal oxide (A3) containing, as a main component, a metal oxide other than titanium oxide with water as a dispersant and further heating the resulting sol.
